(19)

Europäisches
Patentamt
European
Patent Office
Office européen
des brevets

(11) **EP 3 772 491 A1**

(12) **EUROPEAN PATENT APPLICATION**

(43) Date of publication:
**10.02.2021 Bulletin 2021/06**

(51) Int Cl.:
*C03C 3/087* (2006.01)     *C03C 3/097* (2006.01)
*C03C 3/11* (2006.01)      *C03C 3/112* (2006.01)
*C03C 21/00* (2006.01)     *B32B 17/00* (2006.01)
*C03C 27/10* (2006.01)

(21) Application number: **20189883.0**

(22) Date of filing: **06.08.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.08.2019   US 201962884439 P**

(71) Applicant: **Corning Incorporated
Corning, New York 14831 (US)**

(72) Inventor: **TIETZ MOORE, Lisa Anne
Corning, NY New York 14830 (US)**

(74) Representative: **Epping - Hermann - Fischer
Patentanwaltsgesellschaft mbH
Schloßschmidstraße 5
80639 München (DE)**

(54) **CHEMICALLY-STRENGTHENABLE GLASSES FOR LAMINATES**

(57)     Disclosed herein glass articles having a glass composition. The glass composition includes $SiO_2$ in an amount in a range from about 63 mol% to about 75 mol%; $Al_2O_3$ in an amount in a range from about 7 mol% to about 13 mol%; $R_2O$ in an amount from about 13 mol% to about 24 mol%; $P_2O_5$ in an amount in a range from about 0 mol% to about 2 mol%; MgO is present in a range from about 0 mol% to about 10 mol%; ZnO is present in an amount in a range from about 0 mol% to about 10 mol%; and CaO, SrO, BaO and, F⁻; or $TiO_2$, $ZrO_2$, and Cl⁻; the glass article having an anneal point (°C) and a softening point (°C), and a relationship of (anneal point + softening point)/2 in a range from about 625°C to about 725°C.

FIG. 8

EP 3 772 491 A1

**Description**

**CROSS-REFERENCE TO RELATED APPLICATIONS**

This application claims the benefit of priority under 35 U.S.C. § 119 of U.S. Provisional Application Serial No. 62/884,439 filed on August 8, 2019 the content of which is relied upon and incorporated herein by reference in its entirety.

**BACKGROUND**

Glass is used in windows due to its optical clarity and durability. Automotive and architectural windows (or glazing) can include a single glass article (in sheet form) referred to as a monolith, or a laminate that includes two glass articles (in sheet form) with an interlayer of a polymeric material disposed in between. This glazing can be used as a windshield, side lite, rear window, sunroofs and the like in automotive applications. Architectural applications may utilize similar glazing in buildings, panels, walls and the like.

There is a trend toward using lightweight laminates to improve fuel economy. Some designs consist of a thicker outer glass article and a thin inner glass article. In one construction, the thicker glass article comprises a soda lime silicate glass ("SLG") composition and the thinner glass article is a strengthened glass article. The strengthened glass articles comprising an SLG composition can be annealed but not otherwise strengthened to a level believed acceptable to compensate for strength degradation due to reduction in thickness. For example, even when chemically strengthened, glass articles comprising a SLG composition do not exhibit sufficient strength attributes (in terms of compressive stress and depth of compressive stress).

Thermal tempering is commonly used to strengthen thick, monolithic glass articles and has the advantage of creating a deep compressive layer on the glass surface, typically 21% of the overall glass thickness; however, the magnitude of the compressive stress is relatively low, typically less than 100 MPa. Furthermore, thermal tempering becomes increasingly ineffective for thin glass articles (i.e., glass articles having a thickness of less than 2 mm). As such, standard thermal tempering process(es) are suitable for strengthening SLG articles having a thickness of about 3 mm but not thin glass articles, including thin SLG glass articles. Moreover, glass articles comprising a SLG composition have poor chemical strengthening characteristics.

Glass articles comprising an aluminosilicate glass ("AlSi") composition are uniquely suited for use as the thinner glass article, especially those articles meeting today's glazing optical requirements; however, known AlSi glasses tend to exhibit high viscosity relative to SLG articles at the SLG sag temperature (i.e., the temperature at which SLG articles are typically sagged). Accordingly, this viscosity difference means known AlSi glass articles must be sagged separately and cannot be pair sagged, thus adding cost to the overall manufacturing process. Accordingly, there is a need for a thin glass article that can be pair sagged with another glass article that may differ in composition, strengthened to a sufficient degree, and is optionally, fusion-formed.

**SUMMARY**

This disclosure relates to glass compositions and glass articles having such glass compositions, which can be, among other things, pair sagged with different glass articles including glass articles formed by a non-fusion processes, and glass articles made from SLG compositions.

The glass compositions described herein contain additions of, among other components, combinations of $Li_2O$, $CaO$, $TiO_2$, $ZrO_2$, $F^-$, and/or $Cl^-$, remain fusion formable, and can be co-sagged with SLG articles in glazing manufacturing processes. The advantages of various embodiments of the glass compositions described herein include exhibiting a lower viscosity in the temperature range for co-sagging with SLG articles, or they provide increased compressive stress after strengthening, or both.

Unless otherwise specified, the glass compositions disclosed herein are described in mole percent (mol%) as analyzed on an oxide basis. Additional features and advantages will be set forth in the detailed description which follows, and in part will be clear to those skilled in the art from that description or recognized by practicing the embodiments as described herein, including the detailed description which follows, the claims, as well as the appended drawings. It is to be understood that both the foregoing general description and the following detailed description are intended to provide an overview or framework to understanding the nature and character of the claims. The accompanying drawings are included to provide a further understanding and are incorporated in and constitute a part of this specification. The drawings illustrate one or more embodiment(s), and together with the description serve to explain principles and operation of the various embodiments.

**BRIEF DESCRIPTION OF THE DRAWINGS**

FIG. 1A is a process flow chart of a method of making a laminated glazing using pair sagging according to the instant disclosure;

FIG. 1B is a process flow chart of a method of making laminated glazing according to the prior art;

FIG. 2 is a side view illustration of a glass article according to the instant disclosure;

FIG. 3 is a side view illustration of a glass article according to the instant disclosure;

FIG. 4 is a side view illustration of a laminate including a glass article according to the instant disclosure;

FIG. 5 is a side view illustration of a laminate including a glass article according to the instant disclosure;

FIG. 6 is a side view of a laminate including a glass article according to the instant disclosure;

FIG. 7 is an exploded side view of the glass article to be cold-formed to another glass article according to the instant disclosure;

FIG. 8 is a side view illustration of the resulting cold-formed laminate of FIG. 6;

FIG. 9 is an illustration of a vehicle including a glass article or laminate according to the instant disclosure; and

FIG. 10 is a plot of temperature as a function of time and shows the Lehr temperature profile for heat treating samples of glass articles according to the instant disclosure.

**DESCRIPTION**

Reference will now be made in detail to various embodiments, examples of which are illustrated in the accompanying drawings.

In most cases automotive glazing is curved or bent, and is not flat or planar. Architectural applications may also use similarly curved glass articles. Depending on thicknesses of the glass articles and the desired shape, the glass articles can be cold-formed (e.g., without using heat) or thermally shaped (e.g., with heat) to achieve the curved shape.

Thermal shaping can include a sagging process, which uses gravity to shape the glass when it is heated. In the sagging step, a glass article is placed on top of another glass article forming a stack (with a potential intervening release layer), which is placed on a mold. The stack and mold are both heated by placing in a furnace (e.g., a box furnace, or a Lehr furnace) in which the stack is gradually heated to the sag temperature of the glass articles. During this process, gravity sags the glass articles together to a curved shape. As used herein, "sag temperature" refers to the temperature at which the log viscosity of a glass article is 9.9 Poise. The sag temperature can be determined by fitting the Vogel-Fulcher-Tamman (VFT) equation: Log h = A + B/(T-C), where T is the temperature, A, B and C are fitting constants and h is the dynamic viscosity, to annealing point data measured using the bending beam viscosity (BBV) measurement, to softening point data measured by fiber elongation.

The heating time and temperature are selected to obtain the desired degree of sagging and final shape. Subsequently, the glass articles are removed from the furnace and cooled. The two glass articles are then separated, re-assembled with an interlayer between the glass articles and heated under vacuum to seal the glass articles and interlayer together into a laminate.

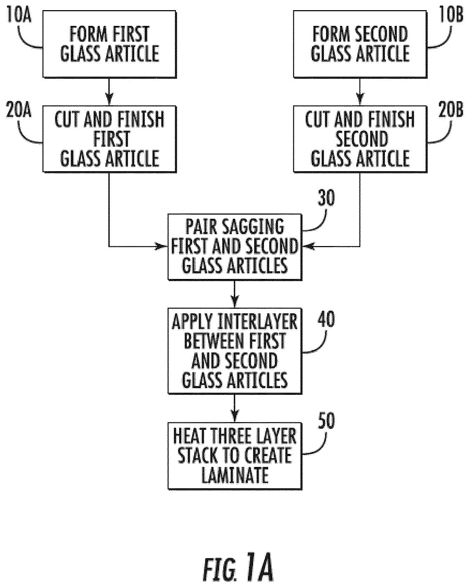

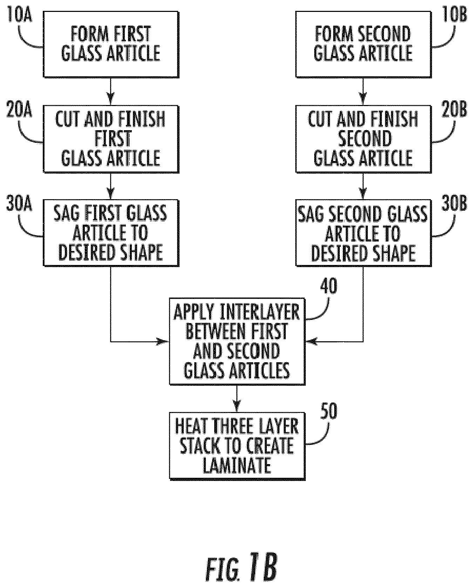

Sagging the two glass articles together as shown in step 40 of FIG. 1A streamlines the manufacturing process; however, when the glass articles have different sag temperatures, pair sagging becomes a challenge. For example, known AlSi glass articles have a sag temperature that is more than 80°C greater than the sag temperature of SLG articles. Moreover, known aluminosilicate glass articles have viscosities that are more than 200 times greater than the viscosity of typical SLG articles at sag temperatures typically used for sagging two SLG glass articles.

The glass articles described herein, however, can be pair sagged with another glass article that differs in any one or more of composition, thickness, strengthening level, and forming method (e.g., float formed as opposed to fusion formed). For example, the glass articles described herein can be pair sagged with SLG glass articles or other glass articles with lower sag temperatures than the glass articles described herein, even when having reduced thicknesses (e.g., less than 2.1 mm or less than 1.6 mm). In addition, the glass articles according to one or more embodiments retain their fusion formability and strengthening capability.

The glass articles described herein can be described as aluminosilicate glass articles or including an aluminosilicate glass composition. The aluminosilicate glass composition or glass article formed therefrom includes $SiO_2$ and $Al_2O_3$ and is not SLG.

In one or more embodiments, the glass composition comprising: $SiO_2$ in an amount in a range from about 63 mol% to about 75 mol%; $Al_2O_3$ in an amount in a range from about 7 mol% to about 13 mol%; $R_2O$ in an amount from about 13 mol% to about 24 mol%; $P_2O_5$ in an amount in a range from about 0 mol% to about 2 mol%; MgO is present in a range from about 0 mol% to about 10 mol%; ZnO is present in an amount in a range from about 0 mol% to about 10 mol% provided that the mol.% of MgO and mol.% of ZnO are not simultaneously 0 mol.%; and the glass composition comprises at least one of (A) and (B): wherein (A) comprises: $Li_2O$ present in an amount in a range from about 0 mol% to about 2 mol%; CaO is present in an amount in a range from about 0 mol% to about 2 mol%; SrO is present in an amount in a range from about 0 mol% to about 2 mol%; BaO is present in an amount in a range from about 0 mol% to about 2 mol%; and $F^-$ is present in an amount in a range from about 0 mol% to about 2 mol% provided that the mol.% of $Li_2O$, mol.% of CaO, mol.% of SrO, mol.% of BaO, and mol.% of $F^-$ are not simultaneously 0 mol.%; and wherein (B) comprises: $TiO_2$ is present in an amount in a range from about 0 mol% to about 2 mol%; $ZrO_2$ is present in an amount in a range from about 0 mol% to about 2 mol%; and $Cl^-$ is present in an amount in a range from about 0 mol% to about 2 mol% provided that the mol.% of $TiO_2$, mol.% of $ZrO_2$, and mol.% of $Cl^-$ are not simultaneously 0 mol.%; and the glass article having an anneal point (°C) and a softening point (°C), and a relationship of (anneal point + softening point)/2 in a range from about 625°C to about 725°C.

In one or more embodiments, various properties of the glass articles described herein can be modulated, with the presence of compositions (A) or (B) or (A) and (B). For example, as described in greater detail herein, the presence of compositions (A) or (B) or (A) and (B) can modulate a temperature (°C) at a viscosity of $10^{11}$ poise ($T_{log11}$) that is less than about 650°C; greater than 650°C; or maintain the temperature at about 650°C while, in some instances, resulting in a glass article that exhibits a compressive stress (CS) of at least 500 MPa extending from a surface to a depth of compression (DOL) of at least 40 $\mu$m from a major surface of the glass article. Such features lead to the production of glass articles that can be pair sagged with another glass article that differs in any one or more of composition, thickness, strength or strengthening level, and forming method (e.g., float formed as opposed to fusion formed).

The glass articles described herein can be fusion formed or is fusion formable, meaning it is or can be formed using a fusion process.

In one or more embodiments, the glass articles described herein include glass compositions exhibiting viscosity curves that are shifted "to the left" as compared to known alkali aluminosilicate glass compositions. That is, the strain point, annealing point, softening point, and/or co-sagging temperature of embodiments of the glass article described herein are located closer to the viscosity curve of known SLG articles. The closer alignment of the glass properties of the glass articles described herein and known SLG articles can reduce optical distortions and shape mismatches that can be introduced through co-sagging of such glass articles. Without being bound by theory, this "softening" (e.g., shifting the viscosity curve to the left) of the glass articles of one or more embodiments of this disclosure can be accomplished in the absence of $B_2O_3$. Additionally, glass articles having the compositions described herein can also be made substantially free of parakeldyshite (sodium-zirconium silicate) defects, which may arise during the fusion process.

In this regard, the glass composition includes $Al_2O_3$ in an amount of about 2 mol% or greater, 4 mol% or greater, 7 mol% or greater, about 10 mol% or greater or about 12 mol% or greater. The glass compositions described herein can include $Al_2O_3$ in a range from about 7 mol% to about 13 mol%, from about 8 mol% to about 13 mol%, from about 9 mol% to about 13 mol%, from about 10 mol% to about 13 mol%, from about 7 mol% to about 12 mol%, from 7 mol% to about 11 mol%, from about7 mol% to about 10 mol%, from about 7 mol% to about 9 mol%, from about 8 mol% to about 12 mol%, from about 8 mol% to about 11 mol%, from about 8 mol% to about 10 mol%, or from about 9 mol% to about 10 mol%, and all ranges and sub-ranges therebetween.

The glass composition described herein can include $SiO_2$ in an amount in the range from about 63 mol% to about 75 mol%, from about 64 mol % to about 75 mol%, from about 65 mol% to about 75 mol%, from about 66 mol % to about 75 mol%, from about 68 mol % to about 75 mol%, from about 70 mol % to about 75 mol%, from about 72 mol % to about 75 mol%, from about 63 mol% to about 74 mol%, from about 63 mol% to about 72 mol%, from about 63 mol% to about 70 mol%, from about 63 mol% to about 68 mol%, from about 63 mol% to about 66 mol%, from about 63 mol% to about 67 mol%, from about 64 mol% to about 76 mol%, or from about 65 mol% to about 66 mol%, and all ranges and sub-ranges therebetween.

The glass composition described herein can include a total amount of $R_2O$ that is greater than or equal to about 10 mol%, greater than or equal to about 15 mol%, or greater than or equal to about 20 mol%. For example, the glass composition described herein can include a total amount of $R_2O$ in a range from about 13 mol% to about 24 mol%, from about 14 mol% to about 24 mol%, from about 15 mol% to about 24 mol%, from about 16 mol% to about 24 mol%, from about 17 mol% to about 24 mol%, from about 18 mol% to about 24 mol%, from about 20 mol% to about 24 mol%, from about 13 mol% to about 22 mol%, from about 13 mol% to about 20 mol%, from about 13 mol% to about 18 mol%, from about 13 mol% to about 16 mol%, from about 13 mol% to about 15 mol%, from about 17 mol% to about 21 mol%, from about 18 mol% to about 20 mol%, or from about 19 mol% to about 21 mol% , and all ranges and sub-ranges therebetween. Unless otherwise specified, $R_2O$ refers to the total amount of alkali metal oxides including $Li_2O$, $Na_2O$, $K_2O$, $Rb_2O$, and $Cs_2O$.

The glass composition can be substantially free of $Rb_2O$, $Cs_2O$ or both $Rb_2O$ and $Cs_2O$. As used herein, the phrase "substantially free" with respect to the components of the compositions described herein generally means that the component is not actively or intentionally added to the composition during initial batching, but can be present as an impurity in an amount less than about 0.001 mol%. The glass compositions described herein include $R_2O$, which includes the total amount of $Li_2O$, $Na_2O$ and $K_2O$ only (i.e., the glass composition is substantially free of $Rb_2O$ and $Cs_2O$). For

example, the glass composition can include $R_2O$, which includes the total amount of $Na_2O$ and $K_2O$ only (i.e., the glass composition is substantially free of $Li_2O$, $Rb_2O$ and $Cs_2O$). In a further example, the glass composition can comprise at least one alkali metal oxide selected from $Li_2O$, $Na_2O$, and $K_2O$. In this case, the glass composition or glass article formed therefrom can be referred to as an "alkali aluminosilicate glass" due to the presence of an alkali metal oxide.

The glass composition can include $Na_2O$ in an amount greater than or equal to about 12 mol%, greater than or equal to about 14 mol%, greater than or equal to about 16 mol%, or greater than or equal to about 17 mol%. For example, the composition can include $Na_2O$ in a range from about from about 15 mol% to about 20 mol%, from about 16 mol% to about 20 mol%, from about 17 mol% to about 20 mol%, from about 18 mol% to about 20 mol%, from about 15 mol% to about 18 mol%, from about 16 mol% to about 18 mol%, from about 17 mol% to about 18 mol%, or from about 15 mol% to about 17 mol%, and all ranges and sub-ranges therebetween.

The glass composition can include less than about 4 mol% $K_2O$, less than about 3 mol% $K_2O$ or less than about 2 mol% $K_2O$. In some instances, the glass composition can include $K_2O$ in an amount in a range from about from about 0.5 mol% to about 4 mol%, from about 0.5 mol% to about 3.5 mol%, from about 0.5 mol% to about 3 mol%, from about 0.5 mol% to about 2.5 mol%, from about 0.5 mol% to about 2 mol%, from about 0.5 mol% to about 1.5 mol%, from about 0.5 mol% to about 1 mol%, from about 1 mol% to about 4 mol%, from about 1 mol% to about 3.5 mol%, from about 1 mol% to about 3 mol%, from about 1 mol% to about 2.5 mol%, from about 1.5 mol% to about 4 mol%, from about 1.5 mol% to about 3.5 mol%, from about 1.5 mol% to about 3 mol%, from about 1.5 mol% to about 2.5 mol%, from about 1.75 mol% to about 3 mol%, from about 1.75 mol% to about 2.75 mol%, from about 1.75 mol% to about 3 mol%, or from about 2 mol% to about 3 mol%, and all ranges and sub-ranges therebetween. The glass composition can include $Li_2O$ in a range from about 0 mol% to about 2 mol%, from about 0 mol% to about 1.5 mol%, from about 0 mol% to about 1 mol%, from about 0 mol% to about 0.5 mol%, from about 1 mol% to about 2 mol%, from about 0.5 mol% to about 1.5 mol%, from about 0.5 mol% to about 1 mol%, from about 0.1 mol% to about 2 mol%, from about 0.1 mol% to about 1.5 mol%, from about 0.1 mol% to about 1 mol%, from about 0.1 mol% to about 0.5 mol% or from about 1 mol% to about 1.5 mol%, and all ranges and sub-ranges therebetween. The glass composition can be substantially free of $Li_2O$.

The glass compositions described herein can have a relationship of a difference between $R_2O$ and the amount of $Al_2O_3$ (i.e., $R_2O - Al_2O_3$) that can be in a range from about 4 mol% to about 12 mol%, from about 5 mol% to about 12 mol%, from about 6 mol% to about 12 mol%, from about 7 mol% to about 12 mol%, from about 8 mol% to about 12 mol%, from about 9 mol% to about 12 mol%, from about 4 mol% to about 11 mol%, from about 4 mol% to about 10 mol%, from about 4 mol% to about 9 mol%, from about 4 mol% to about 8 mol%, from about 4 mol% to about 7 mol%, or from about 8 mol% to about 10 mol%, and all ranges and sub-ranges therebetween.

The glass compositions described herein can comprise the compositional ratio of $R_2O$ to $Al_2O_3$ (i.e., $R_2O:Al_2O_3$) that is about 3 or less, about 2.5 or less, or about 2 or less. For example, the glass composition comprises the compositional ratio $R_2O:Al_2O_3$ in the range from about 1.5 to about 3. In further examples, the glass composition comprises the compositional ratio $R_2O:Al_2O_3$ in a range from about 1.6 to about 3, from about 1.7 to about 3, from about 1.8 to about 3, from about 1.9 to about 3, from about 2 to about 3, from about 2.1 to about 3, from about 2.2 to about 3, from about 2.3 to about 3, from about 2.4 to about 3, from about 2.5 to about 3, from about 1.5 to about 2.9, from about 1.5 to about 2.8, from about 1.5 to about 2.6, from about 1.5 to about 2.5, from about 1.5 to about 2.4, from about 1.5 to about 2.2, from about 1.5 to about 2, from about 1.5 to about 1.9, or from about 1.5 to about 1.8, and all ranges and sub-ranges therebetween.

The glass compositions described herein are substantially free from $B_2O_3$.

The glass compositions described herein can comprise $P_2O_5$ in an amount in a range from about 0 mol% to about 2 mol%, such as from about 0.1 mol% to about 1.2 mol%, from about 0.1 mol% to about 1.1 mol%, from about 0.1 mol% to about 1.0 mol%, from about 0.1 mol% to about 0.9 mol%, from about 0.1 mol% to about 0.8 mol%, from about 0.1 mol% to about 0.7 mol%, from about 0.1 mol% to about 0.6 mol%, from about 0.1 mol% to about 0.5 mol%, from about 0.1 mol% to about 0.4 mol%, from about 0.1 mol% to about 0.3 mol%, from about 0.1 to about 0.2 mol%, from about 0.5 mol% to about 1.2 mol%, from about 0.5 mol% to about 1.0 mol%, from about 0.5 mol% to about 0.8 mol%, from about 0.5 mol% to about 0.6 mol%, and all ranges and sub-ranges therebetween.

The glass composition described herein can have a water content β-OH of about 0.1 abs/mm to about 0.5 abs/mm as measured according to IR spectroscopy. In particular, this is a measure of the hydroxyl content in the glass by determining the fundamental hydroxyl absorption at about 2809 nm. The β-OH is calculated according to the following equation:

$$\beta\text{-OH} = \frac{\log_{10}\left(\frac{T_1}{T_2}\right)}{X}$$

in which X is the sample thickness in mm, $T_1$ is the sample transmittance at the reference wavelength (2600 nm) and $T_2$ is the minimum sample transmittance of the hydroxyl absorption wavelength (2809 nm). The reference wavelength compensates for signal loss that results from surface reflections, scatter, and refraction in the sample and is chosen from a region of no absorption and as close as possible to the absorption wavelength of interest. The $\beta$-OH is the linear absorption coefficient, which is given in units of absorbance/mm thickness (abs/mm). In embodiments, the glass composition has a water content $\beta$-OH of about 0.1 abs/mm to about 0.5 abs/mm, about 0.2 abs/mm to about 0.5 abs/mm, about 0.3 abs/mm to about 0.5 abs/mm, about 0.4 abs/mm to about 0.5 abs/mm, about 0.1 abs/mm to about 0.4 abs/mm, about 0.1 abs/mm to about 0.3 abs/mm, about 0.1 abs/mm to about 0.2 abs/mm, about 0.2 abs/mm to about 0.3 abs/mm, about 0.2 abs/mm to about 0.4 abs/mm, or about 0.3 abs/mm to about 0.4 abs/mm. For example, the water content of the glass is no more than 0.5 abs/mm, and in other embodiments, the water content of the glass is at least 0.1 abs/mm.

Water content in a glass can be increased in various ways. For example, the water content can be increased by adjusting the melting conditions of the glass. For example, certain melters, gas-oxygen burners are used to melt the glass. By adjusting the gas to oxygen ratio, more water can be produced in the combustion reaction, which causes the glass to absorb more water during melting. Or the water content can be increased by increasing the surface of glass exposed to the atmosphere during melting. In still another embodiment, the water content is increased by substituting the oxides of the composition with hydroxides or hydrated compounds, e.g., substituting aluminum hydroxide ($Al(OH)_3$) for all or a portion of aluminum oxide ($Al_2O_3$) or substituting borax (e.g., a composition comprising sodium borate, sodium tetraborate, or disodium tetraborate) for all or a portion of $Na_2O$. In this way, the glass composition can contain a higher water content than it would otherwise contain based on regular process conditions.

The glass compositions described herein can include a total amount of RO in a range from about 1 mol% to about 10 mol%, such as up to about 7 mol%. For example, the glass compositions can comprise RO in an amount from about 0 mol% to about 7 mol%, from about 0 mol% to about 5 mol%, from about 0 mol% to about 6 mol%, from about 0 mol% to about 8 mol%, from about 0 mol% to about 10 mol%, from about 0.1 mol% to about 7 mol%, from about 0.1 mol% to about 5 mol%, from about 0.1 mol% to about 6 mol%, from about 0.1 mol% to about 8 mol% or from about 0.1 mol% to about 10 mol and all ranges and sub-ranges therebetween. Unless otherwise specified, RO refers to the total amount of alkaline earth metal oxides such as MgO, CaO, SrO, BaO, ZnO and the like.

Thus, for example, the glass compositions described herein includes CaO in an amount of about 5 mol% or less, about 4.5 mol% or less, about 4 mol% or less, about 3.5 mol% or less, about 3 mol% or less, about 2.5 mol% or less, about 2 mol% or less, about 1.5 mol% or less, about 1 mol% or less, about 0.5 mol% or less or about 0.05 mol% or less. Thus, for example, the glass compositions described herein can be substantially free of CaO. In further examples, the glass composition comprises CaO in an amount from about 0 mol% to about 5 mol%, from about 0 mol% to about 4.5 mol%, from about 0 mol% to about 4 mol%, from about 0 mol% to about 3.5 mol%, from about 0 mol% to about 3 mol%, from about 0 mol% to about 2.5 mol%, from about 0 mol% to about 2 mol%, from about 0 mol% to about 1.5 mol%, from about 0 mol% to about 1 mol%, from about 0 mol% to about 0.8 mol%, from about 0 mol% to about 0.75 mol%, from about 0 mol% to about 0.5 mol%, from about 0 mol% to about 0.25 mol%, from about 0 mol% to about 0.1 mol%, from about 0.01 mol% to about 5 mol%, from about 0.01 mol% to about 4.5 mol%, from about 0.01 mol% to about 4 mol%, from about 0.01 mol% to about 3.5 mol%, from about 0.01 mol% to about 3 mol%, from about 0.01 mol% to about 2.5 mol%, from about 0.01 mol% to about 2 mol%, from about 0.01 mol% to about 1.5 mol%, from about 0.01 mol% to about 1 mol%, from about 0.01 mol% to about 0.8 mol%, from about 0.01 mol% to about 0.75 mol%, from about 0.01 mol% to about 0.5 mol%, from about 0.01 mol% to about 0.25 mol%, or from about 0.01 mol% to about 0.1 mol%, and all ranges and sub-ranges therebetween.

The glass compositions described herein can include MgO in an amount in the range from about 0 mol% to about 7 mol%, from about 0 mol% to about 6.5 mol%, from about 0 mol% to about 6 mol%, from about 0 mol% to about 5.5 mol%, from about 0 mol% to about 5 mol%, from about 0 mol% to about 4.5 mol%, from about 0 mol% to about 4 mol%, from about 0 mol% to about 3.5 mol%, from about 0 mol% to about 3 mol%, from about 0 mol% to about 2.5 mol%, from about 0 mol% to about 2 mol%, from about 0 mol% to about 1.5 mol%, from about 0 mol% to about 1 mol%, from about 0.5 mol% to about 6.5 mol%, from about 1 mol% to about 6.5 mol%, from about 1.5 mol% to about 6.5 mol%, from about 2 mol% to about 6.5 mol%, from about 2.5 mol% to about 6.5 mol%, from about 3 mol% to about 6.5 mol%, from about 3.5 mol% to about 6.5 mol%, from about 4 mol% to about 6.5 mol%, from about 4.5 mol% to about 6.5 mol%, from about 5 mol% to about 6.5 mol%, from about 0.5 mol% to about 3.5 mol%, from about 1 mol% to about 3.5 mol%, from about 1.5 mol% to about 3 mol%, from about 0.5 mol% to about 2.5 mol%, or from about 2 mol% to about 4 mol%, and all ranges and sub-ranges therebetween.

The glass compositions described herein can include ZnO in an amount in the range from about 0 mol% to about 7 mol%, from about 0 mol% to about 6.5 mol%, from about 0 mol% to about 6 mol%, from about 0 mol% to about 5.5 mol%, from about 0 mol% to about 5 mol%, from about 0 mol% to about 4.5 mol%, from about 0 mol% to about 4 mol%, from about 0 mol% to about 3.5 mol%, from about 0 mol% to about 3 mol%, from about 0 mol% to about 2.5 mol%, from about 0 mol% to about 2 mol%, from about 0 mol% to about 1.5 mol%, from about 0 mol% to about 1 mol%, from about 0.5 mol% to about 7 mol%, from about 0.5 mol% to about 6.5 mol%, from about 0.5 mol% to about 6 mol%, from about 0.5 mol% to about 5.5 mol%, from about 0.5 mol% to about 5 mol%, from about 0.5 mol% to about 4.5 mol%, from about 1 mol% to about 7 mol%, from about 1 mol% to about 6.5 mol%, from about 1 mol% to about 6 mol%, from about 1 mol% to about 5.5 mol%, from about 1 mol% to about 5 mol%, from about 1 mol% to about 4.5 mol%, from about 1.5 mol% to about 4.5 mol%, from about 2 mol% to about 4.5 mol%, from about 2.5 mol% to about 4.5 mol%, from about 3 mol% to about 4.5 mol%, from about 3.5 mol% to about 4.5 mol%, from about 0.5 mol% to about 3.5 mol%, from about 1 mol% to about 3.5 mol%, from about 1.5 mol% to about 4 mol%, or from about 2 mol% to about 3.5 mol%, and all ranges and sub-ranges therebetween.

The glass compositions described herein can include SrO in an amount in the range from about 0 mol% to about 2 mol%, from about 0 mol% to about 1.5 mol%, from about 0 mol% to about 1 mol%, from about 0.5 mol% to about 2 mol%, from about 1 mol% to about 2 mol%, or from about 1.5 mol% to about 2 mol%, and all ranges and sub-ranges therebetween.

The glass compositions described herein can include BaO in an amount in the range from about 0 mol% to about 2 mol%, from about 0 mol% to about 1.5 mol%, from about 0 mol% to about 1 mol%, from about 0.5 mol% to about 2 mol%, from about 1 mol% to about 2 mol%, or from about 1.5 mol% to about 2 mol%, and all ranges and sub-ranges therebetween.

The glass compositions described herein can include $SnO_2$ in an amount equal to or less than about 0.25 mol%, less than about 0.24 mol%, less than about 0.22 mol%, less than about 0.2 mol%, less than about 0.18 mol%, less than about 0.16 mol%, less than about 0.15 mol%, less than about 0.14 mol%, less than about 0.12 mol%. The glass composition comprises $SnO_2$ in a range from about 0.01 mol% to about 0.25 mol%, from about 0.01 mol% to about 0.24 mol%, from about 0.01 mol% to about 0.22 mol%, from about 0.01 mol% to about 0.2 mol%, from about 0.01 mol% to about 0.18 mol%, from about 0.01 mol% to about 0.16 mol%, from about 0.01 mol% to about 0.15 mol%, from about 0.01 mol% to about 0.14 mol%, from about 0.01 mol% to about 0.12 mol%, or from about 0.01 mol% to about 0.10 mol%, and all ranges and sub-ranges therebetween. The glass compositions described herein can be substantially free of $SnO_2$. In some cases, $SnO_2$ can be substituted with a fining agent that is a multivalent or other oxygen absorbing agent such as antimony, arsenic, iron, cerium, and the like.

The glass compositions described herein can include an oxide that imparts a color or tint to the glass articles. In some embodiments, the glass composition includes an oxide that prevents discoloration of the glass article when the glass article is exposed to ultraviolet radiation. Examples of such oxides include, without limitation oxides of: Ti, V, Cr, Mn, Fe, Co, Ni, Cu, Ce, W, and Mo.

The glass compositions described herein can include Fe expressed as $Fe_2O_3$, wherein Fe is present in an amount up to (and including) about 1 mol%. But the glass compositions described herein can be substantially free of Fe. When present, however, the glass composition can comprise Fe expressed as $Fe_2O_3$ in a range from about 0 mol% to about 1 mol%, from about 0 mol% to about 0.9 mol%, from about 0 mol% to about 0.8 mol%, from about 0 mol% to about 0.7 mol%, from about 0 mol% to about 0.6 mol%, from about 0 mol% to about 0.5 mol%, from about 0 mol% to about 0.4 mol%, from about 0 mol% to about 0.3 mol%, from about 0 mol% to about 0.2 mol%, 0 mol% to about 0.1 mol%, from about 0.01 mol% to about 0.9 mol%, from about 0.01 mol% to about 0.8 mol%, from about 0.01 mol% to about 0.7 mol%, from about 0.01 mol% to about 0.6 mol%, from about 0.01 mol% to about 0.5 mol%, from about 0.01 mol% to about 0.4 mol%, from about 0.01 mol% to about 0.3 mol%, from about 0.01 mol% to about 0.2 mol%, from about 0.05 mol% to about 0.1 mol%, from about 0.1 mol% to about 1 mol%, from about 0.2 mol% to about 1 mol%, from about 0.3 mol% to about 1 mol%, from about 0.4 mol% to about 1 mol%, from about 0.5 mol% to about 1 mol%, from about 0.6 mol% to about 1 mol%, from about 0.2 mol% to about 0.8 mol%, or from about 0.4 to about 0.8 mol% and all ranges and sub-ranges therebetween. The Fe source can be oxalate/I2, $Fe_2O_3$/I8.

The glass compositions described herein can include a total amount of Co, expressed as $Co_3O_4$, in an amount in the range from about 0.001 mol% to 0.01 mol%, from about 0.002 mol% to 0.01 mol%, from about 0.003 mol% to 0.01 mol%, from about 0.004 mol% to 0.01 mol%, from about 0.005 mol% to 0.01 mol%, from about 0.006 mol% to 0.01 mol%, from about 0.007 mol% to 0.01 mol%, from about 0.001 mol% to 0.009 mol%, from about 0.001 mol% to 0.008 mol%, from about 0.001 mol% to 0.007 mol%, from about 0.001 mol% to 0.006 mol%, or from about 0.001 mol% to 0.005 mol%, and all ranges and sub-ranges therebetween.

The glass compositions described herein can include any one or more of NiO, $V_2O_5$, and $TiO_2$.

Where the glass composition includes $TiO_2$, $TiO_2$ can be present in an amount of about 5 mol% or less, about 2.5 mol% or less, about 2 mol% or less or about 1 mol% or less. For examples, the glass composition can be substantially free of $TiO_2$ or it can contain from about 0 mol% to about 2 mol%, from about 0 mol% to about 1.5 mol%, from about 0 mol% to about 1 mol%, from about 0.5 mol% to about 2 mol%, from about 1 mol% to about 2 mol%, or from about 1.5 mol% to about 2 mol%, and all ranges and sub-ranges therebetween.

Where the glass composition includes NiO, NiO can be present in an amount of about 0.6 mol% or less, or about 0.1 mol% or less. The glass composition can be substantially free of NiO. The glass composition can be substantially free of $V_2O_5$. The glass composition can be substantially free of $TiO_2$. The glass composition can be substantially free of any two or all three of NiO, $V_2O_5$, and $TiO_2$.

Where the glass composition includes CuO, the glass composition can include less than about 0.9 mol% CuO (e.g., less than about 0.5 mol%, less than about 0.1 mol%, or less than about 0.01 mol%). The glass composition can be substantially free of CuO.

Where the glass composition includes Se, the glass composition can include less than about 0.2 mol% Se (e.g., less than about 0.1 mol%, or less than about 0.01 mol%). The glass composition can be substantially free of Se.

The glass composition (or article formed therefrom) comprises a liquidus viscosity that enables the formation of the glass articles via specific techniques. As used herein, the term "liquidus viscosity" refers to the viscosity of a molten glass at the liquidus temperature, wherein the term "liquidus temperature" refers to the temperature at which crystals first appear as a molten glass cools down from the melting temperature (or the temperature at which the very last crystals melt away as temperature is increased from room temperature).

The glass composition (or the glass article formed therefrom) exhibits a liquidus viscosity greater than or equal to about 100 kiloPoise (kP), greater than or equal to about 500 kP, greater than or equal to about 1000 kP, greater than or equal to 5000 kP, greater than or equal to 10,000 kP, greater than or equal to 15,000 kP, greater than or equal to about 20,000 kP, greater than or equal to 25,000 kP, greater than or equal to 30,000 kP, greater than or equal to 35,000 kP. The glass composition (or glass article formed therefrom) exhibits a liquidus viscosity in the range from about 100 kP to about 50,000 kP. Such glass compositions can be described as fusion formable and the resulting glass articles formed by a fusion process are characterized as fusion formed, where fusion formable and fusion formed indicate the liquidus viscosity exhibited by the glass composition or glass article, respectively. In some embodiments, the fusion formed glass article is substantially free of draw lines that are present in typical float formed glass articles. The liquidus viscosity is determined by the following method. First the liquidus temperature of the glass is measured in accordance with ASTM C829-81 (2015), titled "Standard Practice for Measurement of Liquidus Temperature of Glass by the Gradient Furnace Method." Next the viscosity of the glass at the liquidus temperature is measured in accordance with ASTM C965-96(2012), titled "Standard Practice for Measuring Viscosity of Glass Above the Softening Point."

The various glass articles described herein have glass compositions that exhibit one or more of strain point temperature, relatively low anneal point temperature, softening point temperature, sag temperature, and relatively high liquidus viscosities.

For example, the glass composition or glass articles formed from those compositions exhibit a strain point temperature in a range from about 475°C to about 530°C, from about 480°C to about 530°C, from about 490°C to about 530°C, from about 500°C to about 530°C, from about 510°C to about 530°C, from about 520°C to about 530°C, and all ranges and sub-ranges therebetween. In some instances, the glass composition or glass articles formed from those compositions exhibit a strain point temperature that is about 530°C or less, or about 520°C or less. The strain point temperature is determined using the beam bending viscosity method of ASTM C598-93(2013) and can be defined as the temperature at which viscosity is $10^{14.68}$ poise.

The glass composition or glass articles formed from those compositions exhibit an annealing point temperature in a range of less than or equal to about 600°C. The annealing point can be in a range from about 520°C to about 600°C, from about 530°C to about 580°C, from about 540°C to about 590°C, from about 550°C to about 590°C, from about 560°C to about 590°C, from about 570°C to about 580°C, and all ranges and sub-ranges therebetween. The annealing point is determined using the beam bending viscosity method of ASTM C598-93(2013) and can be defined as the temperature at which viscosity is $10^{13.18}$ poise.

The glass composition or glass articles formed from those compositions exhibit a softening point temperature in a range of less than or equal to about 810°C. The softening point temperature can be in a range from about 740°C to about 805°C, from about 750°C to about 805°C, from about 760°C to about 805°C, from about 770°C to about 805°C, from about 780°C to about 805°C, from about 790°C to about 805°C, and all ranges and sub-ranges therebetween. The softening point temperature is determined using the parallel plate viscosity method of ASTM C1351M-96(2012) and can be defined as the temperature at which viscosity is $10^{7.6}$ poise.

The glass composition or glass articles formed from those compositions can exhibit a difference in magnitude between the annealing point temperature and the softening point temperature that is greater than about 150°C, greater than about 175°C, greater than about 200°C, or up to about 225°C. For example, the difference in magnitude between the annealing point temperature and the softening point temperature can be in a range from about 150°C to about 225°C, from about 160°C to about 225°C, from about 170°C to about 225°C, from about 180°C to about 225°C, from about 190°C to about 225°C, from about 200°C to about 225°C, from about 210°C to about 225°C, from about 150°C to about 160°C, from about 150°C to about 170°C, from about 150°C to about 180°C, from about 150°C to about 190°C, from about 150°C to about 200°C, from about 150°C to about 210°C, or from about 15°C to about 225°C, and subranges therebetween.

The glass composition or glass articles formed from those compositions described herein exhibit a relationship of (anneal point temperature + softening point temperature)/2 that is less than about 725°C. For example, the relationship (anneal point temperature + softening point temperature)/2 can be about 720°C or less, about 700°C or less, about 680°C or less, or about 650°C or less. In some instances, the relationship (anneal point temperature + softening point temperature)/2 can be in a range from about 625°C to about 725°C, from about 625°C to about 675°C, from about 625°C to about 665°C, from about 625°C to about 655°C, from about 625°C to about 645°C, from about 625°C to about 635°C, from about 650°C to about 700°C, from about 650°C to about 695°C or about 675°C to about 710°C. The glass compositions or glass articles formed therefrom exhibit the described relationship of (anneal point temperature + softening point temperature)/2, while also being characterized as an aluminosilicate glass. For example, the glass composition or glass articles formed therefrom exhibit the described relationship of (anneal point temperature + softening point temperature)/2 while also including more than about 2 mol% $Al_2O_3$ (e.g., 5 mol% or greater, 7 mol% or greater, or about 10 mol% or greater).

The glass composition or glass articles formed from those compositions described herein exhibit a temperature at a viscosity of about 200 P ($T_{200P}$) that is greater than about 900°C or greater than about 1200°C, as measured by Fulcher fit to high temperature viscosity (HTV) data (i.e., all the temperature measurements from 100 kP to 100 Poise). For example, the glass composition or glass articles formed from those compositions can exhibit a $T_{200P}$ in a range from about 900°C to about 1800°C, from about 1000°C to about 1800°C, from about 1100°C to about 1800°C, from about 1200°C to about 1800°C, from about 1300°C to about 1800°C, from about 1400°C to about 1800°C, from about 1500°C to about 1800°C, from about 900°C to about 1700°C, from about 900°C to about 1600°C, from about 900°C to about 1500°C, from about 900°C to about 1400°C, from about 900°C to about 1300°C, from about 900°C to about 1200°C, from about 900°C to about 1100°C, from about 1200°C to about 1700°C, from about 1200°C to about 1600°C, from about 1200°C to about 1500°C, from about 1200°C to about 1400°C, or from about 1500°C to about 1700°C.

The glass composition or glass articles formed from those compositions described herein exhibit a temperature at a viscosity of about 35 kP ($T_{35kP}$) that is greater than about 1000°C, as measured by Fulcher fit to high temperature viscosity (HTV) data (i.e., all the temperature measurements from 100 kP to 100 poise). In some embodiments, the glass composition or glass articles formed from those compositions exhibit a $T_{35kP}$ of about 1000°C or greater, about 1020°C or greater, about 1030°C or greater, about 1040°C or greater, about 1050°C or greater, about 1060°C or greater, about 1070°C or greater, about 1080°C or greater, about 1090°C or greater, and in embodiments, about 1095°C or less.

The glass composition or glass articles formed from those compositions described herein can have a temperature at a viscosity of about 200 kP ($T_{200kP}$) that is greater than about 900°C, as measured by Fulcher fit to HTV data. In some embodiments, the glass composition or glass articles formed from those compositions exhibit a $T_{200kP}$ that is about 930°C or greater, 940°C or greater, 950°C or greater, 960°C or greater, 970°C or greater, 980°C or greater, or 990°C or greater and, in embodiments, 995°C or less.

The glass articles described herein can exhibit a difference between $T_{200P}$ and $T_{35kP}$ (or a relationship $T_{200P}$ - $T_{35kP}$) having a magnitude in a range from about 300°C to about 500°C. For example, the difference between $T_{200P}$ and $T_{35kP}$ can have a magnitude in a range from about 320°C to about 500°C, from about 340°C to about 500°C, from about 360°C to about 500°C, from about 380°C to about 500°C, from about 400°C to about 500°C, from about 420°C to about 500°C, from about 440°C to about 500°C, from about 460°C to about 500°C, or from about 480°C to about 500°C. In embodiments, the glass article exhibits a difference between $T_{200P}$ and $T_{35kP}$ (or a relationship $T_{200P}$ - $T_{35kP}$) having a magnitude in the range from about 300°C to about 320°C, from about 300°C to about 340°C, from about 300°C to about 360°C, from about 300°C to about 380°C, from about 300°C to about 400°C, from about 300°C to about 420°C, from about 300°C to about 440°C, from about 300°C to about 460°C, or from about 300°C to about 480°C.

The glass articles described herein can exhibit a difference between $T_{200P}$ and the relationship (anneal point + softening point)/2 of at least 800°C. For example, the difference between $T_{200P}$ and the relationship (anneal point + softening point)/2 can be in a range from about 800°C to about 900°C, from about 800°C to about 880°C, from about 800°C to about 860°C, from about 800°C to about 840°C, from about 800°C to about 820°C, from about 820°C to about 900°C, from about 840°C to about 900°C, from about 860°C to about 900°C, or from about 880°C to about 900°C.

The glass articles described herein can exhibit a difference between $T_{35kP}$ and the relationship (anneal point + softening point)/2 of at least 300°C. For example, the difference between $T_{35kP}$ and the relationship (anneal point + softening point)/2 can be in a range from about 300°C to about 450°C, from about 300°C to about 425°C, from about 300°C to about 400°C, from about 300°C to about 375°C, from about 300°C to about 350°C, from about 325°C to about 450°C, from about 350°C to about 450°C, from about 375°C to about 450°C, or from about 400°C to about 450°C.

The glass articles described herein can exhibit a $T_{200P}$, a $T_{35kP}$, or a both $T_{200P}$ and $T_{35kP}$ that are greater than about 1020°C (e.g., about 1025°C or greater, about 1030°C or greater, about 1035°C or greater, about 1040°C or greater, about 1045°C or greater, about 1050°C or greater, about 1055°C or greater, about 1060°C or greater, about 1065°C or greater, or about 1070°C or greater).

The glass articles described herein can exhibit a sag temperature in a range from about 550°C to about 720°C. For example, the glass composition or glass articles formed from those compositions exhibit a sag temperature in a range from about 555°C to about 720°C, from about 560°C to about 720°C, from about 565°C to about 720°C, from about 570°C to about 720°C, from about 575°C to about 720°C, from about 580°C to about 720°C, from about 585°C to about 720°C, from about 590°C to about 720°C, from about 595°C to about 720°C, from about 600°C to about 720°C, from about 605°C to about 720°C, from about 610°C to about 720°C, from about 615°C to about 720°C, from about 620°C to about 720°C, from about 625°C to about 720°C, from about 630°C to about 720°C, from about 635°C to about 720°C, from about 640°C to about 720°C, from about 645°C to about 720°C, from about 650°C to about 720°C, from about 655°C to about 720°C, from about 660°C to about 720°C, from about 665°C to about 720°C, from about 670°C to about 720°C, from about 550°C to about 710°C, from about 550°C to about 700°C, from about 550°C to about 690°C, from about 550°C to about 680°C, from about 550°C to about 670°C, from about 550°C to about 660°C, from about 550°C to about 650°C, from about 550°C to about 640°C, from about 550°C to about 630°C, from about 550°C to about 620°C, from about 550°C to about 610°C, from about 550°C to about 600°C, from about 550°C to about 590°C, from about 550°C to about 580°C, from about 550°C to about 570°C, or from about 550°C to about 560°C. For example, the glass composition or glass article formed from such composition exhibits a sag temperature in a range from about 550°C to about 720°C, while also having a total alkali metal oxide content of about 10 mol% or greater (e.g., greater than or equal to about 15 mol% or greater than or equal to about 20 mol%).

The glass composition or the glass article formed therefrom can exhibit a density at 20°C that is less than about 2.6 $g/cm^3$ or less than about 2.55 $g/cm^3$. For example, the density of the glass composition or the glass article formed therefrom can be in a range from about 2.3 $g/cm^3$ to about 2.6 $g/cm^3$, from about 2.32 $g/cm^3$ to about 2.6 $g/cm^3$, from about 2.34 $g/cm^3$ to about 2.6 $g/cm^3$, from about2.35 $g/cm^3$ to about 2.6 $g/cm^3$, from about2.36 $g/cm^3$ to about 2.6 $g/cm^3$, from about 2.38 $g/cm^3$ to about 2.6 $g/cm^3$, from about 2.4 $g/cm^3$ to about 2.6 $g/cm^3$, from about 2.42 $g/cm^3$ to about 2.6 $g/cm^3$, from about 2.44 $g/cm^3$ to about 2.6 $g/cm^3$, from about 2.45 $g/cm^3$ to about 2.6 $g/cm^3$, from about 2.46 $g/cm^3$ to about 2.6 $g/cm^3$, from about 2.48 $g/cm^3$ to about 2.6 $g/cm^3$, from about 2.5 $g/cm^3$ to about 2.6 $g/cm^3$, from about 2.3 $g/cm^3$ to about 2.58 $g/cm^3$, from about 2.3 $g/cm^3$ to about 2.56 $g/cm^3$, from about 2.3 $g/cm^3$ to about 2.55 $g/cm^3$, from about 2.3 $g/cm^3$ to about 2.54 $g/cm^3$, from about 2.3 $g/cm^3$ to about 2.52 $g/cm^3$, from about 2.3 $g/cm^3$ to about 2.5 $g/cm^3$, from about 2.3 $g/cm^3$ to about 2.48 $g/cm^3$, from about 2.3 $g/cm^3$ to about 2.46 $g/cm^3$, from about2.3 $g/cm^3$ to about 2.45 $g/cm^3$, from about2.3 $g/cm^3$ to about 2.44 $g/cm^3$, from about 2.3 $g/cm^3$ to about 2.42 $g/cm^3$, from about 2.3 $g/cm^3$ to about 2.4 $g/cm^3$, from about 2.45 $g/cm^3$ to about 2.52 $g/cm^3$, or from about 2.48 $g/cm^3$ to about 2.55 $g/cm^3$. The density was determined using the buoyancy method of ASTM C693-93(2013).

The glass composition is fusion formable as characterized by its compatibility with current fusion-draw designs requiring zircon refractory lining and hardware for isopipes. In some instances, glass compositions can tend to react with the zircon, breaking the zircon down into silica, which dissolves in the glass, and zirconia, which forms solid inclusions that are entrained by flow into the molten glass and ends up in the final glass article. The attack of zircon by the molten glass continues over time and the level or concentration of zirconia inclusions in the glass increases. If the temperature at which the zircon in the isopipe breaks down to form zirconia and silica (also referred to herein as the "breakdown temperature" or $T_{zbd}$ is higher than any temperature seen on the isopipe, the problem of zirconia inclusions in fusion-drawn glass (also referred to as "fusion line zirconia") would not occur. In this instance, the temperatures used to form the glass over the isopipe would be too low to create zirconia, and no such defect could form in the glass. Because fusion is essentially an isoviscous process, the highest temperature seen by the glass corresponds to a particular viscosity of the glass. In those standard fusion-draw operations known in the art, this viscosity is about 35,000 poise ("35 kPoise" or "35 kP"). The glass compositions described herein exhibit a zircon breakdown viscosity of less than about 35 kP, while also exhibiting the other properties described herein. In particular, the glass compositions described herein exhibit a zircon breakdown viscosity in a range from about 6 kP up to about 35 kP, while also exhibiting the relationship of (anneal point + softening point)/2 in a range from about 625°C to about 725°C. Coefficients of thermal expansion (CTE) are expressed herein in terms of parts per million (ppm)/°C and represent a value measured over a temperature range from about 20°C to about 300°C, unless otherwise specified. High temperature (or liquid) coefficients of thermal expansion (high temperature CTE) are also expressed in terms of part per million (ppm) per degree Celsius (ppm/°C), and represent a value measured in the high temperature plateau region of the instantaneous coefficient of thermal expansion (CTE) vs. temperature curve. The high temperature CTE measures the volume change associated with heating or cooling of the glass through the transformation region.

The glass articles described herein can exhibit a CTE measured over a temperature range from about 20°C to about 300°C in the range from about 75 x $10^{-7}$ ppm/°C or greater, about 80 x $10^{-7}$ ppm/°C, about 90 x $10^{-7}$ ppm/°C or greater, about 100 x $10^{-7}$ ppm/°C or greater, about 105 x $10^{-7}$ ppm/°C or greater. For examples, the glass articles described herein can exhibit a high temperature (or liquid) CTE in the range from about 75 x $10^{-7}$ ppm /°C to about 120 x $10^{-7}$ ppm /°C, from about 80 x $10^{-7}$ ppm /°C to about 120 x $10^{-7}$ ppm /°C, from about 85 x $10^{-7}$ ppm /°C to about 120 x $10^{-7}$ ppm /°C, from about 90 x $10^{-7}$ ppm /°C to about 120 x $10^{-7}$ ppm/°C, from about 95 x $10^{-7}$ ppm/°C to about 120 x $10^{-7}$ ppm/°C, from about 100 x $10^{-7}$ ppm/°C to about 120 x $10^{-7}$ ppm/°C, from about 75 x $10^{-7}$ ppm/°C to about 115 x $10^{-7}$ ppm/°C, from about 75 x $10^{-7}$ ppm/°C to about 110 x $10^{-7}$ ppm/°C, from about 75 x $10^{-7}$ ppm/°C to about 105 x $10^{-7}$ ppm/°C, from about 75 x $10^{-7}$ ppm/°C to about 100 x $10^{-7}$ ppm/°C, from about 75 x $10^{-7}$ ppm/°C to about 95 x $10^{-7}$ ppm/°C, from about 80 x $10^{-7}$ ppm/°C to about 100 x $10^{-7}$ ppm/°C, from about 90 x $10^{-7}$ ppm/°C to about 100 x $10^{-7}$ ppm/°C, or from about 95 x $10^{-7}$ ppm/°C to about 100 x $10^{-7}$ ppm/°C. The glass articles described herein can exhibit a Young's modulus in the range from about 70 GPa to about 85 GPa, from about 72 GPa to about 85 GPa, from about 74 GPa to about 85 GPa, from about 75 GPa to about 85 GPa, from about 76 GPa to about 85 GPa, from about 70 GPa to about 80 GPa, from about 72 GPa to about 80 GPa, from about 74 GPa to about 80 GPa, from about 75 GPa to about 80 GPa, from about 76 GPa to about 80 GPa, from about 70 GPa to about 78 GPa, from about 70 GPa to about 76 GPa, from about 70 GPa to about 75 GPa, from about 72 GPa to about 78 GPa, from about 75 GPa to about 79 GPa, or from about 70 GPa to about 77 GPa.

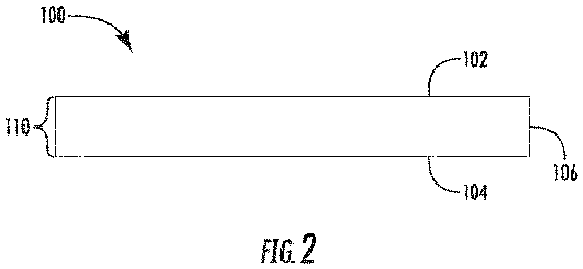

Referring to FIG. 2, embodiments of the glass article 100 include a first major surface 102, an opposing second major surface 104 defining a thickness $t$ 110 between the first major surface 102 and the second major surface 104.

The thickness t can be about 3 millimeters or less (e.g., in the range from about 0.01 millimeter to about 3 millimeters, from about 0.1 millimeter to about 3 millimeters, from about 0.2 millimeter to about 3 millimeters, from about 0.3 millimeter to about 3 millimeters, from about 0.4 millimeter to about 3 millimeters, from about 0.01 millimeter to about 2.5 millimeters, from about 0.01 millimeter to about 2 millimeters, from about 0.01 millimeter to about 1.5 millimeters, from about 0.01 millimeter to about 1 millimeter, from about 0.01 millimeter to about 0.9 millimeter, from about 0.01 millimeter to about 0.8 millimeter, from about 0.01 millimeter to about 0.7 millimeter, from about 0.01 millimeter to about 0.6 millimeter, from about 0.01 millimeter to about 0.5 millimeter, from about 0.1 millimeter to about 0.5 millimeter, or from about 0.3 millimeter to about 0.5 millimeter.)

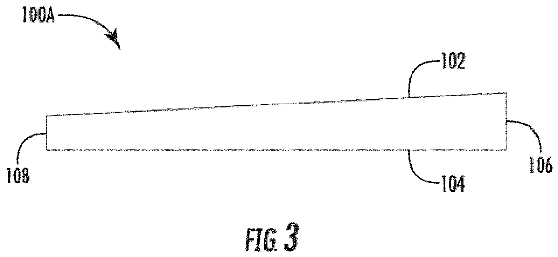

The glass article can be a substantially planar sheet, although other embodiments may utilize a curved or otherwise shaped or sculpted article. In some instances, the glass article can have a 3D or 2.5D shape. Additionally, or alternatively, the thickness of the glass article can be constant along one or more dimension or may vary along one or more of its dimensions for aesthetic and/or functional reasons. For example, the edges of the glass article can be thicker as compared to more central regions of the glass article. The length, width and thickness dimensions of the glass article may also vary according to the article application or use. In some embodiments, the glass article 100A can have a wedged shape in which the thickness at one minor surface 106 is greater than the thickness at an opposing minor surface 108, as illustrated in FIG. 3. Where the thickness varies, the thickness ranges disclosed herein are the maximum thickness between the major surfaces.

The glass article can have a refractive index in the range from about 1.45 to about 1.55. As used herein, the refractive index values are with respect to a wavelength of about 590 nm.

The glass article can be characterized by the manner in which it is formed. For instance, where the glass article can be characterized as float-formable (i.e., formed by a float process, or float-formed), or down-drawable (i.e., formed by a down-draw process, or down-drawn). Particular examples of down draw processes include a fusion draw process or a slot draw process. Glass articles made by fusion draw processes are fusion formed, and glass articles formed by a slot draw process are slot drawn.

The glass articles described herein can be formed by a float process. A float-formed glass article can be characterized by smooth surfaces and uniform thickness is made by floating molten glass on a bed of molten metal, typically tin. In an example process, molten glass that is fed onto the surface of the molten tin bed forms a floating glass ribbon. As the glass ribbon flows along the tin bath, the temperature is gradually decreased until the glass ribbon solidifies into a solid glass article that can be lifted from the tin onto rollers. Once off the bath, the glass article can be cooled further and annealed to reduce internal stress. In some embodiments, float formed glass articles exhibit draw lines from the tin bath.

The glass articles described herein can be formed by a down-draw process. Down-drawn glass articles have a uniform thickness and relatively pristine surfaces. Because the average flexural strength of the glass article is controlled by the amount and size of surface flaws, a pristine surface that has had minimal contact has a higher initial strength. In addition, down drawn glass articles have a very flat, smooth surface that can be used in its final application without costly grinding and polishing.

The fusion process uses a drawing tank that has a channel for accepting molten glass raw material. The channel has weirs that are open at the top along the length of the channel on both sides of the channel. When the channel fills with molten material, the molten glass overflows the weirs. Due to gravity, the molten glass flows down the outside surfaces of the drawing tank as two flowing glass films. These outside surfaces of the drawing tank extend down and inwardly so that they join at an edge below the drawing tank. The two flowing glass films join at this edge to fuse and form a single flowing glass article. The fusion draw method offers the advantage that, because the two glass films flowing over the channel fuse together, neither of the outside surfaces of the resulting glass article comes in contact with any part of the apparatus. Thus, the surface properties of the fusion drawn glass article are not affected by such contact.

The glass articles described herein can be formed by a slot draw process. The slot draw process is distinct from the fusion draw method. In slot draw processes, the molten raw material glass is provided to a drawing tank. The bottom of the drawing tank has an open slot with a nozzle that extends the length of the slot. The molten glass flows through the slot/nozzle and is drawn downward as a continuous glass article and into an annealing region.

The glass articles described herein can exhibit an amorphous microstructure and can be substantially free of crystals or crystallites. In other words, the glass articles exclude glass-ceramic materials.

The glass articles described herein can exhibit a total solar transmittance of about 90% or less, over a wavelength range from about 300 nm to about 2500 nm, when the glass article has a thickness of about 0.7 mm. For example, the glass article exhibits a total solar transmittance in a range from about 60% to about 88%, from about 62% to about 88%, from about 64% to about 88%, from about 65% to about 88%, from about 66% to about 88%, from about 68% to about 88%, from about 70% to about 88%, from about 72% to about 88%, from about 60% to about 86%, from about 60% to about 85%, from about 60% to about 84%, from about 60% to about 82%, from about 60% to about 80%, from about 60% to about 78%, from about 60% to about 76%, from about 60% to about 75%, from about 60% to about 74%, or from about 60% to about 72%.

The glass articles described herein can average transmittance in the range from about 75% to about 85%, at a thickness of about 0.7 mm or about 1 mm, over a wavelength range from about 380 nm to about 780 nm. In some embodiments, the average transmittance at this thickness and over this wavelength range can be in a range from about 75% to about 84%, from about 75% to about 83%, from about 75% to about 82%, from about 75% to about 81%, from about 75% to about 80%, from about 76% to about 85%, from about 77% to about 85%, from about 78% to about 85%, from about 79% to about 85%, or from about 80% to about 85%. The glass article exhibits $T_{uv-380}$ or $T_{uv-400}$ of 50% or less (e.g., 49% or less, 48% or less, 45% or less, 40% or less, 30% or less, 25% or less, 23% or less, 20% or less, or 15% or less), at a thickness of about 0.7 mm or about 1 mm, over a wavelength range from about 300 nm to about 400 nm.

The glass articles described herein can be strengthened to include a CS that extends from a major surface to a DOL. The surface CS regions are balanced by a central portion exhibiting a tensile stress (CT). At the DOL, the stress crosses from a positive (compressive) stress to a negative (tensile) stress; however compressive stress and tensile stress values provided herein are absolute values.

The glass articles described herein can be strengthened mechanically by utilizing a mismatch of the coefficient of thermal expansion between portions of the article to create a compressive stress region and a central region exhibiting a tensile stress. In some embodiments, the glass article can be strengthened thermally by heating the glass to a temperature below the glass transition point and then rapidly quenching.

The glass articles described herein can be chemically strengthening by ion exchange. In the ion exchange process, ions at or near the surface of the glass article are replaced by - or exchanged with - larger ions having the same valence or oxidation state. In those embodiments in which the glass article comprises an alkali aluminosilicate glass, ions in the surface layer of the article and the larger ions are monovalent alkali metal cations, such as Li+, Na+, K+, Rb+, and Cs+. Alternatively, monovalent cations in the surface layer can be replaced with monovalent cations other than alkali metal cations, such as Ag+ or the like. In such embodiments, the monovalent ions (or cations) exchanged into the glass article generate a stress.

Ion exchange processes can be carried out by immersing a glass article in a molten salt bath (or two or more molten salt baths) containing the larger ions to be exchanged with the smaller ions in the glass article. It should be noted that aqueous salt baths may also be utilized. In addition, the composition of the bath(s) can include more than one type of larger ion (e.g., Na+ and K+) or a single larger ion. It will be appreciated by those skilled in the art that parameters for the ion exchange process, including, but not limited to, bath composition and temperature, immersion time, the number of immersions of the glass article in a salt bath (or baths), use of multiple salt baths, additional steps such as annealing, washing, and the like, are generally determined by the composition of the glass article (including the structure of the article and any crystalline phases present) and the desired DOL and CS of the glass article that results from strengthening. Exemplary molten bath composition can include nitrates, sulfates, and chlorides of the larger alkali metal ion. Typical nitrates include $KNO_3$, $NaNO_3$, $LiNO_3$, $NaSO_4$ and combinations thereof. The temperature of the molten salt bath typically can be in a range from about 380°C up to about 450°C, while immersion times range from about 15 minutes up to about 100 hours depending on glass article thickness, bath temperature and glass (or monovalent ion) diffusivity. However, temperatures and immersion times different from those described above may also be used.

The glass articles can be immersed in a molten salt bath of 100% $NaNO_3$, 100% $KNO_3$, or a combination of $NaNO_3$ and $KNO_3$ having a temperature in a range from about 370°C to about 480°C.

In some embodiments, the glass article can be immersed in a molten mixed salt bath including from about 5% to about 90% $KNO_3$ and from about 10% to about 95% $NaNO_3$. The glass article can be immersed in a second bath, after immersion in a first bath. The first and second baths can have different compositions and/or temperatures from one another. The immersion times in the first and second baths may vary. For example, immersion in the first bath can be longer than the immersion in the second bath.

The glass article can be immersed in a molten, mixed salt bath including $NaNO_3$ and $KNO_3$ (e.g., 49%/51%, 50%/50%, 51%/49%) having a temperature less than about 420°C (e.g., about 400°C or about 380°C) for less than about 5 hours, or even about 4 hours or less.

Ion exchange conditions can be tailored to provide a "spike" or to increase the slope of the stress profile at or near the surface of the resulting glass article. The spike may result in a greater surface CS value. This spike can be achieved by single bath or multiple baths, with the bath(s) having a single composition or mixed composition, due to the unique properties of the glass compositions used in the glass articles described herein.

In one or more embodiments, where more than one monovalent ion is exchanged into the glass article, the different monovalent ions may exchange to different depths within the glass article (and generate different magnitudes of stresses within the glass article at different depths). The resulting relative depths of the stress-generating ions can be determined and cause different characteristics of the stress profile.

Surface CS is measured using those means known in the art, such as by surface stress meter (FSM) using commercially available instruments such as the FSM-6000, manufactured by Orihara Industrial Co., Ltd. (Japan). Surface stress measurements rely upon the accurate measurement of the stress optical coefficient (SOC), which is related to the birefringence of the glass. SOC in turn is measured by those methods that are known in the art, such as fiber and four point bend methods, both of which are described in ASTM standard C770-98 (2013), entitled "Standard Test Method for Measurement of Glass Stress-Optical Coefficient," the contents of which are incorporated herein by reference in their entirety, and a bulk cylinder method. As used herein CS can be the "maximum compressive stress" which is the highest compressive stress value measured within the compressive stress layer. In some embodiments, the maximum compressive stress is located at the surface of the glass article. In other embodiments, the maximum compressive stress may occur at a depth below the surface, giving the compressive profile the appearance of a "buried peak."

DOL can be measured by FSM or by a scattered light polariscope (SCALP) (such as the SCALP-04 scattered light polariscope available from Glasstress Ltd., located in Tallinn, Estonia), depending on the strengthening method and conditions. When the glass article is chemically strengthened by an ion exchange treatment, FSM or SCALP can be used depending on which ion is exchanged into the glass article. Where the stress in the glass article is generated by exchanging potassium ions into the glass article, FSM is used to measure DOL. Where the stress is generated by exchanging sodium ions into the glass article, SCALP is used to measure DOL. Where the stress in the glass article is generated by exchanging both potassium and sodium ions into the glass, the DOL is measured by SCALP, since it is believed the exchange depth of sodium indicates the DOL and the exchange depth of potassium ions indicates a change in the magnitude of the compressive stress (but not the change in stress from compressive to tensile); the exchange depth of potassium ions in such glass articles is measured by FSM.

The glass article can be strengthened to exhibit a DOL that is described a fraction of the thickness t of the glass article (as described herein). For example, The DOL can be equal to or greater than about 0.03t, equal to or greater than about 0.05t, equal to or greater than about 0.06t, equal to or greater than about 0.1t, equal to or greater than about 0.11t, equal to or greater than about 0.12t, equal to or greater than about 0.13t, equal to or greater than about 0.14t, equal to or greater than about 0.15t, equal to or greater than about 0.16t, equal to or greater than about 0.17t, equal to or greater than about 0.18t, equal to or greater than about 0.19t, equal to or greater than about 0.2t, equal to or greater than about 0.21t. In some embodiments, the DOL can be in a range from about 0.03t to about 0.25t, from about 0.04t to about 0.25t, from about 0.05t to about 0.25t, from about 0.06t to about 0.25t, from about 0.07t to about 0.25t, from about 0.08t to about 0.25t, from about 0.09t to about 0.25t, from about 0.10t to about 0.25t, from about 0.11t to about 0.25t, from about 0.12t to about 0.25t, from about 0.13t to about 0.25t, from about 0.14t to about 0.25t, from about 0.15t to about 0.25t, from about 0.03t to about 0.24t, from about 0.03t to about 0.23t, from about 0.03t to about 0.22t, from about 0.03t to about 0.21t, from about 0.03t to about 0.2t, from about 0.03t to about 0.19t, from about 0.03t to about 0.18t, from about 0.03t to about 0.17t, from about 0.03t to about 0.16t, or from about 0.03t to about 0.15t. In some instances, the DOL can be about 20 μm or less. Or the DOL can be about 35 μm or greater (e.g., from about 40 μm to about 300 μm, from about 50 μm to about 300 μm, from about 60 μm to about 300 μm, from about 70 μm to about 300 μm, from about 80 μm to about 300 μm, from about 90 μm to about 300 μm, from about 100 μm to about 300 μm, from about 110 μm to about 300 μm, from about 120 μm to about 300 μm, from about 140 μm to about 300 μm, from about 150 μm to about 300 μm, from about 40 μm to about 290 μm, from about 40 μm to about 280 μm, from about 40 μm to about 260 μm, from about 40 μm to about 250 μm, from about 40 μm to about 240 μm, from about 40 μm to about 230 μm, from about 40 μm to about 220 μm, from about 40 μm to about 210 μm, from about 40 μm to about 200 μm, from about 40 μm to about 180 μm, from about 40 μm to about 160 μm, from about 40 μm to about 150 μm, from about 40 μm to about 140 μm, from about 40 μm to about 130 μm, from about 40 μm to about 120 μm, from about 40 μm to about 110 μm, or from about 40 μm to about 100 μm).

The strengthened glass article can have a CS (which can be found at the surface or a depth within the glass article) of about 200 MPa or greater, 300 MPa or greater, 400 MPa or greater, about 500 MPa or greater, about 600 MPa or greater, about 700 MPa or greater, about 800 MPa or greater, about 900 MPa or greater, about 930 MPa or greater, about 1000 MPa or greater, or about 1050 MPa or greater.

The strengthened glass article can have a maximum CT of about 20 MPa or greater, about 30 MPa or greater, about 40 MPa or greater, about 45 MPa or greater, about 50 MPa or greater, about 60 MPa or greater, about 70 MPa or greater, about 75 MPa or greater, about 80 MPa or greater, or about 85 MPa or greater. In some embodiments, the maximum CT can be in a range from about 40 MPa to about 100 MPa.

In one or more particular embodiments, the glass article (having a thickness of about 1 mm or less) exhibits a surface CS in a range from about 650 MPa to about 850 MPa and a corresponding DOL in a range from about 35 micrometers to about 65 micrometers. In such embodiments, the strengthening levels (in terms of surface CS and DOL) is exhibited by the glass article after being immersed in a molten salt bath of 100% $KNO_3$ for less than about 8 hours, about 6 hours or less, or about 4 hours or less. The temperature can be in a range from about 380°C to about 430°C.

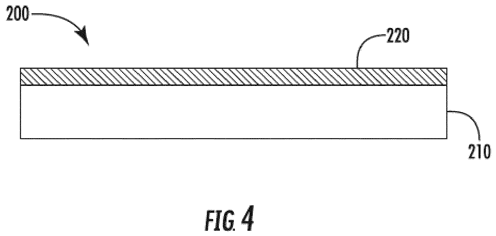

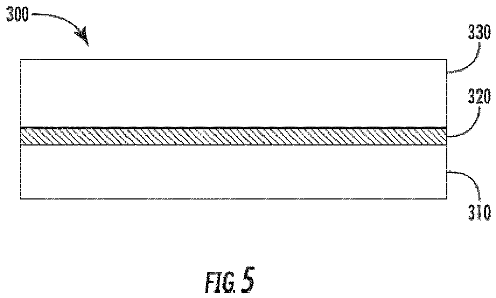

The instant disclosure also pertains to various embodiments of a laminate including the glass articles described herein. The laminate 200 can include a first glass layer 210 including a glass article according to one or more embodiments described herein, and an interlayer 220 disposed on the first glass layer 210, as illustrated in FIG. 4. As shown in FIG. 5, the laminate 300 can include a first glass layer 310, an interlayer 320 disposed on the first glass layer 310, and a second glass layer 330 disposed on the interlayer 320 opposite the first glass layer 310. Either one or both of the first glass layer 310 and the second glass layer 330 used in the laminate can include the glass article described herein. As shown in FIG. 5, the interlayer 320 is disposed between the first and second glass layers.

The laminate 300 can include a first glass layer comprising a glass article as described herein, and a second glass layer that includes a different composition than the glass articles described herein. For example, the second glass layer can include a SLG article, alkali aluminosilicate glass article, alkali containing borosilicate glass article, alkali aluminophosphosilicate glass article, or alkali aluminoborosilicate glass article. In some embodiments, both the first and second glass layers can comprise the glass articles described herein, which can be the same or different from one another.

Either one or both the first glass layer and the second glass layer comprise a thickness of less than about 1.6 mm (e.g., 1.55 mm or less, 1.5 mm or less, 1.45 mm or less, 1.4 mm or less, 1.35 mm or less, 1.3 mm or less, 1.25 mm or less, 1.2 mm or less, 1.15 mm or less, 1.1 mm or less, 1.05 mm or less, 1 mm or less, 0.95 mm or less, 0.9 mm or less, 0.85 mm or less, 0.8 mm or less, 0.75 mm or less, 0.7 mm or less, 0.65 mm or less, 0.6 mm or less, 0.55 mm or less, 0.5mm or less, 0.45 mm or less, 0.4 mm or less, 0.35 mm or less, 0.3 mm or less, 0.25 mm or less, 0.2 mm or less, 0.15 mm or less, or about 0.1 mm or less). The lower limit of thickness can be 0.1 mm, 0. 2mm or 0.3 mm. In some embodiments, the thickness of either one or both the first glass layer and the second glass layer is in the range from about 0.1 mm to less than about 1.6 mm, from about 0.1 mm to about 1.5 mm, from about 0.1 mm to about 1.4 mm, from about 0.1 mm to about 1.3 mm, from about 0.1 mm to about 1.2 mm, from about 0.1 mm to about 1.1 mm, from about 0.1 mm to about 1 mm, from about 0.1 mm to about 0.9 mm, from about 0.1 mm to about 0.8 mm, from about 0.1 mm to about 0.7 mm, from about 0.1 mm, from about 0.2 mm to less than about 1.6 mm, from about 0.3 mm to less than about 1.6 mm, from about 0.4 mm to less than about 1.6 mm, from about 0.5 mm to less than about 1.6 mm, from about 0.6 mm to less than about 1.6 mm, from about 0.7 mm to less than about 1.6 mm, from about 0.8 mm to less than about 1.6 mm, from about 0.9 mm to less than about 1.6 mm, from about 1 mm to about 1.6 mm, from about 0.4 mm to about 1.2 mm, from about 0.5 mm to about 1.2 mm, from about 0.7 mm to about 1.2 mm, from about 0.4 mm to about 1 mm, from about 0.5 mm to about 1 mm, or from about 0.7 mm to about 1 mm. In some embodiments, the first glass layer and the second glass layer have substantially the same thickness as one another.

While one of the first and second glass layers has a thickness less than about 1.6 mm, the other of the first and second glass layers has a thickness that is about 1 mm or greater, or about 1.6 mm or greater. The first and the second glass layers have thicknesses that differ from one another. For example, while one of the first and second glass layers has a thickness less than about 1.6 mm, the other of the first and second glass layers has a thickness that is about 1.7 mm or greater, about 1.75 mm or greater, about 1.8 mm or greater, about 1.7 mm or greater, about 1.75 mm or greater, about 1.8 mm or greater, about 1.85 mm or greater, about 1.9 mm or greater, about 1.95 mm or greater, about 2 mm or greater, about 2.1 mm or greater, about 2.2 mm or greater, about 2.3 mm or greater, about 2.4 mm or greater, 2.5 mm or greater, 2.6 mm or greater, 2.7 mm or greater, 2.8 mm or greater, 2.9 mm or greater, 3 mm or greater, 3.2 mm or greater, 3.4 mm or greater, 3.5 mm or greater, 3.6 mm or greater, 3.8 mm or greater, 4 mm or greater, 4.2 mm or greater, 4.4 mm or greater, 4.6 mm or greater, 4.8 mm or greater, 5 mm or greater, 5.2 mm or greater, 5.4 mm or greater, 5.6 mm or greater, 5.8 mm or greater, or 6 mm or greater. In some embodiments the first and/or second glass layers has a thickness in a range from about 1.6 mm to about 6 mm, from about 1.7 mm to about 6 mm, from about 1.8 mm to about 6 mm, from about 1.9 mm to about 6 mm, from about 2 mm to about 6 mm, from about 2.1 mm to about 6 mm, from about 2.2 mm to about 6 mm, from about 2.3 mm to about 6 mm, from about 2.4 mm to about 6 mm, from about 2.5 mm to about 6 mm, from about 2.6 mm to about 6 mm, from about 2.8 mm to about 6 mm, from about 3 mm to about 6 mm, from about 3.2 mm to about 6 mm, from about 3.4 mm to about 6 mm, from about 3.6 mm to about 6 mm, from about 3.8 mm to about 6 mm, from about 4 mm to about 6 mm, from about 1.6 mm to about 5.8 mm, from about 1.6 mm to about 5.6 mm, from about 1.6 mm to about 5.5 mm, from about 1.6 mm to about 5.4 mm, from about 1.6 mm to about 5.2 mm, from about 1.6 mm to about 5 mm, from about 1.6 mm to about 4.8 mm, from about 1.6 mm to about 4.6 mm, from about 1.6 mm to about 4.4 mm, from about 1.6 mm to about 4.2 mm, from about 1.6 mm to about 4 mm, from about 3.8 mm to about 5.8 mm, from about 1.6 mm to about 3.6 mm, from about 1.6 mm to about 3.4 mm, from about 1.6 mm to about 3.2 mm, or from about 1.6 mm to about 3 mm.

In one or more embodiments the first glass layer is relatively thin in comparison to the second glass layer. In other words, the second glass layer has a thickness greater than the first glass layer. The second glass layer can have a thickness that is more than two times the thickness of the first glass layer. In one or more embodiments, the second glass layer can have a thickness that is in the range from about 1.5 times to about 10 times the thickness of the first glass layer (e.g., from about 1.75 times to about 10 times, from about 2 times to about 10 times, from about 2.25 times to about 10 times, from about 2.5 times to about 10 times, from about 2.75 times to about 10 times, from about 3 times to about 10 times, from about 3.25 times to about 10 times, from about 3.5 times to about 10 times, from about 3.75 times to about 10 times, from about 4 times to about 10 times, from about 1.5 times to about 9 times, from about 1.5 times to about 8 times, from about 1.5 times to about 7.5 times, from about 1.5 times to about 7 times, from about 1.5 times to about 6.5 times, from about 1.5 times to about 6 times, from about 1.5 times to about 5.5 times, from about 1.5 times to about 5 times, from about 1.5 times to about 4.5 times, from about 1.5 times to about 4 times, from about 1.5 times to about 3.5 times, from about 2 times to about 7 times, from about 2.5 times to about 6 times, from about 3 times to about 6 times).

The first glass layer and the second glass layer can have the same thickness; however, the second glass layer is more rigid or has a greater stiffness than the first glass layer, and in very specific embodiments, both the first glass layer and the second glass layer have a thickness in the range of 0.2 mm and 1.6 mm.

The laminate 200, 300 can have a thickness of 6.85 mm or less, or 5.85 mm or less, where the thickness comprises the sum of thicknesses of the first glass layer, the second glass layer, the interlayer and any other layers. In various embodiments, the laminate can have a thickness in the range of about 1.8 mm to about 6.85 mm, or in the range of about 1.8 mm to about 5.85 mm, or in the range of about 1.8 mm to about 5.0 mm, or 2.1 mm to about 6.85 mm, or in the range of about 2.1 mm to about 5.85 mm, or in the range of about 2.1 mm to about 5.0 mm, or in the range of about 2.4 mm to about 6.85 mm, or in the range of about 2.4 mm to about 5.85 mm, or in the range of about 2.4 mm to about 5.0 mm, or in the range of about 3.4 mm to about 6.85 mm, or in the range of about 3.4 mm to about 5.85 mm, or in the range of about 3.4 mm to about 5.0 mm.

The laminate 300, 400 exhibits at least one radius of curvature that is less than 1000 mm, or less than 750 mm, or less than 500 mm, or less than 300 mm. The laminate 300 exhibits at least one radius of curvature of about 10 m or less, or about 5 m or less along at least one axis. The laminate 400 can have a radius of curvature of 5 m or less along at least a first axis and along the second axis that is perpendicular to the first axis. The laminate can have a radius of curvature of 5 m or less along at least a first axis and along the second axis that is not perpendicular to the first axis.

The first glass layer has a first sag temperature and the second glass layer has a second sag temperature, wherein the difference between the first sag temperature and the second sag temperature is about 100°C or less, about 90°C or less, about 80°C or less, about 75°C or less, about 70°C or less, about 60°C or less, about 50°C or less, about 40°C or less, about 30°C or less, about 20°C or less, or about 10°C or less.

The first or second glass layer may utilize a glass article that is strengthened, as described herein. The first glass layer comprises a strengthened glass article according to the embodiments described herein, while the second glass layer is not strengthened. The first glass layer comprises a strengthened glass article according to the embodiments described herein, while the second glass layer is annealed. The first glass layer is strengthened chemically, mechanically and/or thermally, while the second glass layer is strengthened in a different manner than the first glass layer (chemically, mechanically and/or thermally). The first glass layer is strengthened chemically, mechanically and/or thermally, while the second glass layer is strengthened in the same manner as the first glass layer (chemically, mechanically and/or thermally).

The interlayer used herein (e.g., 320) can include a single layer or multiple layers. The interlayer (or layers thereof) can be formed polymers such as polyvinyl butyral (PVB), acoustic PVB (APVB), ionomers, ethylene-vinyl acetate (EVA) and thermoplastic polyurethane (TPU), polyester (PE), polyethylene terephthalate (PET) and the like. The thickness of the interlayer can be in the range from about 0.5 mm to about 2.5 mm, from about 0.8 mm to about 2.5 mm, from about 1 mm to about 2.5 mm or from about 1.5 mm to about 2.5 mm.

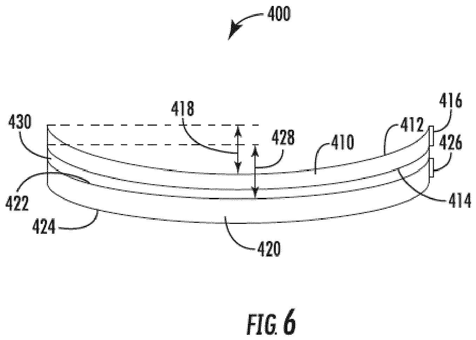

Another aspect of this disclosure pertains to a laminate 400 comprising a first curved glass layer 410, a second curved glass layer 420 and an interlayer 430 disposed between the first curved glass layer and the second curved glass layer, as illustrated in FIG. 6. The first curved glass layer 410 includes a first major surface 412, a second major surface 414 opposing the first major surface, a first thickness 416 defined as the distance between the first major surface and second major surface, and a first sag depth 418. The second curved glass layer 420 includes a third major surface 422, a fourth major surface 424 opposing the third major surface, a second thickness 426 defined as the distance between the third major surface and the fourth major surface, and a second sag depth 428. The orientation of the laminate 400 of FIG. 6 shows the second surface 414 as a convex surface and the third surface 422 as a concave surface. The positions of the first curved glass layer can be reversed. The first curved glass layer exhibits a first viscosity and the second curved glass layer exhibits a second viscosity that differs from the first viscosity at a given temperature. The first curved glass layer is formed from one or more embodiments of the glass compositions described herein. The temperature at which the first viscosity and second viscosity is measured can be from about 590°C to about 650°C (or about 630°C). In some embodiments, the first viscosity is equal to or greater than about 2 times, about 3 times, about 4 times, about 5 times, about 6 times, about 7 times, about 8 times, about 9 times, or about 10 times the first viscosity, at a temperature of 630°C. Thus, for example at 600°C, the first viscosity can be in a range from about $2 \times 10^{11}$ poise to about $1 \times 10^{15}$ poise, from about $4 \times 10^{11}$ poise to about $1 \times 10^{15}$ poise, from about $5 \times 10^{11}$ poise to about $1 \times 10^{15}$ poise, from about $6 \times 10^{11}$ poise to about $1 \times 10^{15}$ poise, from about $8 \times 10^{11}$ poise to about $1 \times 10^{15}$ poise, from about $1 \times 10^{12}$ poise to about $1 \times 10^{15}$ poise, from about $2 \times 10^{12}$ poise to about $1 \times 10^{15}$ poise, from about $4 \times 10^{12}$ poise to about $1 \times 10^{15}$ poise, from about $5 \times 10^{12}$ poise to about $1 \times 10^{15}$ poise, from about $6 \times 10^{12}$ poise to about $1 \times 10^{15}$ poise, from about $8 \times 10^{12}$ poise to about $1 \times 10^{15}$ poise, from about $1 \times 10^{13}$ poise to about $1 \times 10^{15}$ poise, from about $2 \times 10^{13}$ poise to about $1 \times 10^{15}$ poise, from about $4 \times 10^{13}$ poise to about $1 \times 10^{15}$ poise, from about $5 \times 10^{13}$ poise to about $1 \times 10^{15}$

poise, from about $6 \times 10^{13}$ poise to about $1 \times 10^{15}$ poise, from about $8 \times 10^{13}$ poise to about $1 \times 10^{15}$ poise, from about $1 \times 10^{14}$ poise to about $1 \times 10^{15}$ poise, from about $2 \times 10^{11}$ poise to about $8 \times 10^{14}$ poise, from about $2 \times 10^{11}$ poise to about $6 \times 10^{14}$ poise, from about $2 \times 10^{11}$ poise to about $5 \times 10^{14}$ poise, from about $2 \times 10^{11}$ poise to about $4 \times 10^{14}$ poise, from about $2 \times 10^{11}$ poise to about $2 \times 10^{14}$ poise, from about $2 \times 10^{11}$ poise to about $1 \times 10^{14}$ poise, from about $2 \times 10^{11}$ poise to about $8 \times 10^{13}$ poise, from about $2 \times 10^{11}$ poise to about $6 \times 10^{13}$ poise, from about $2 \times 10^{11}$ poise to about $5 \times 10^{13}$ poise, from about $2 \times 10^{11}$ poise to about $4 \times 10^{13}$ poise, from about $2 \times 10^{11}$ poise to about $2 \times 10^{13}$ poise, from about $2 \times 10^{11}$ poise to about $1 \times 10^{13}$ poise, from about $2 \times 10^{11}$ poise to about $8 \times 10^{12}$ poise, from about $2 \times 10^{11}$ poise to about $6 \times 10^{12}$ poise, or from about $2 \times 10^{11}$ poise to about $5 \times 10^{12}$ poise.

In other examples, at 630°C, the first viscosity can be in a range from about $2 \times 10^{10}$ poise to about $1 \times 10^{13}$ poise, from about $4 \times 10^{10}$ poise to about $1 \times 10^{13}$ poise, from about $5 \times 10^{10}$ poise to about $1 \times 10^{13}$ poise, from about $6 \times 10^{10}$ poise to about $1 \times 10^{13}$ poise, from about $8 \times 10^{10}$ poise to about $1 \times 10^{13}$ poise, from about $1 \times 10^{11}$ poise to about $1 \times 10^{13}$ poise, from about $2 \times 10^{11}$ poise to about $1 \times 10^{13}$ poise, from about $4 \times 10^{11}$ poise to about $1 \times 10^{13}$ poise, from about $5 \times 10^{11}$ poise to about $1 \times 10^{13}$ poise, from about $6 \times 10^{11}$ poise to about $1 \times 10^{13}$ poise, from about $8 \times 10^{11}$ poise to about $1 \times 10^{13}$ poise, from about $1 \times 10^{12}$ poise to about $1 \times 10^{13}$ poise, from about $2 \times 10^{10}$ poise to about $8 \times 10^{12}$ poise, from about $2 \times 10^{10}$ poise to about $6 \times 10^{12}$ poise, from about $2 \times 10^{10}$ poise to about $5 \times 10^{12}$ poise, from about $2 \times 10^{10}$ poise to about $4 \times 10^{12}$ poise, from about $2 \times 10^{10}$ poise to about $2 \times 10^{12}$ poise, from about $2 \times 10^{10}$ poise to about $1 \times 10^{12}$ poise, from about $2 \times 10^{10}$ poise to about $8 \times 10^{11}$ poise, from about $2 \times 10^{10}$ poise to about $6 \times 10^{11}$ poise, from about $2 \times 10^{10}$ poise to about $5 \times 10^{11}$ poise, from about $2 \times 10^{10}$ poise to about $4 \times 10^{11}$ poise, or from about $2 \times 10^{10}$ poise to about $2 \times 10^{11}$ poise.

In still other examples, at 650°C, the first viscosity can be in a range from about $1 \times 10^{10}$ poise to about $1 \times 10^{13}$ poise, from about $2 \times 10^{10}$ poise to about $1 \times 10^{13}$ poise, from about $4 \times 10^{10}$ poise to about $1 \times 10^{13}$ poise, from about $5 \times 10^{10}$ poise to about $1 \times 10^{13}$ poise, from about $6 \times 10^{10}$ poise to about $1 \times 10^{13}$ poise, from about $8 \times 10^{10}$ poise to about $1 \times 10^{13}$ poise, from about $1 \times 10^{11}$ poise to about $1 \times 10^{13}$ poise, from about $2 \times 10^{11}$ poise to about $1 \times 10^{13}$ poise, from about $4 \times 10^{11}$ poise to about $1 \times 10^{13}$ poise, from about $5 \times 10^{11}$ poise to about $1 \times 10^{13}$ poise, from about $6 \times 10^{11}$ poise to about $1 \times 10^{13}$ poise, from about $8 \times 10^{11}$ poise to about $1 \times 10^{13}$ poise, from about $1 \times 10^{12}$ poise to about $1 \times 10^{13}$ poise, from about $1 \times 10^{10}$ poise to about $8 \times 10^{12}$ poise, from about $1 \times 10^{10}$ poise to about $6 \times 10^{12}$ poise, from about $1 \times 10^{10}$ poise to about $5 \times 10^{12}$ poise, from about $1 \times 10^{10}$ poise to about $4 \times 10^{12}$ poise, from about $1 \times 10^{10}$ poise to about $2 \times 10^{12}$ poise, from about $1 \times 10^{10}$ poise to about $1 \times 10^{12}$ poise, from about $1 \times 10^{10}$ poise to about $8 \times 10^{11}$ poise, from about $1 \times 10^{10}$ poise to about $6 \times 10^{11}$ poise, from about $1 \times 10^{10}$ poise to about $5 \times 10^{11}$ poise, from about $1 \times 10^{10}$ poise to about $4 \times 10^{11}$ poise, from about $1 \times 10^{10}$ poise to about $2 \times 10^{11}$ poise, or from about $1 \times 10^{10}$ poise to about $1 \times 10^{11}$ poise.

At 600°C, the second viscosity can be in a range from about $3 \times 10^{10}$ poise to about $8 \times 10^{10}$ poise, from about $4 \times 10^{10}$ poise to about $8 \times 10^{10}$ poise, from about $5 \times 10^{10}$ poise to about $8 \times 10^{10}$ poise, from about $6 \times 10^{10}$ poise to about $8 \times 10^{10}$ poise, from about $3 \times 10^{10}$ poise to about $7 \times 10^{10}$ poise, from about $3 \times 10^{10}$ poise to about $6 \times 10^{10}$ poise, from about $3 \times 10^{10}$ poise to about $5 \times 10^{10}$ poise, or from about $4 \times 10^{10}$ poise to about $6 \times 10^{10}$ poise.

At 630°C, the second viscosity can be in a range from about $1 \times 10^{9}$ poise to about $1 \times 10^{10}$ poise, from about $2 \times 10^{9}$ poise to about $1 \times 10^{10}$ poise, from about $3 \times 10^{9}$ poise to about $1 \times 10^{10}$ poise, from about $4 \times 10^{9}$ poise to about $1 \times 10^{10}$ poise, from about $5 \times 10^{9}$ poise to about $1 \times 10^{10}$ poise, from about $6 \times 10^{9}$ poise to about $1 \times 10^{10}$ poise, from about $1 \times 10^{9}$ poise to about $9 \times 10^{9}$ poise, from about $1 \times 10^{9}$ poise to about $8 \times 10^{9}$ poise, from about $1 \times 10^{9}$ poise to about $7 \times 10^{9}$ poise, from about $1 \times 10^{9}$ poise to about $6 \times 10^{9}$ poise, from about $4 \times 10^{9}$ poise to about $8 \times 10^{9}$ poise, or from about $5 \times 10^{9}$ poise to about $7 \times 10^{9}$ poise. At 650°C, the second viscosity can be in a range from about $5 \times 10^{8}$ poise to about $5 \times 10^{9}$ poise, from about $6 \times 10^{8}$ poise to about $5 \times 10^{9}$ poise, from about $7 \times 10^{8}$ poise to about $5 \times 10^{9}$ poise, from about $8 \times 10^{8}$ poise to about $5 \times 10^{9}$ poise, from about $9 \times 10^{8}$ poise to about $5 \times 10^{9}$ poise, from about $1 \times 10^{9}$ poise to about $5 \times 10^{9}$ poise, from about $1 \times 10^{9}$ poise to about $4 \times 10^{9}$ poise, from about $1 \times 10^{9}$ poise to about $3 \times 10^{9}$ poise, from about $5 \times 10^{8}$ poise to about $4 \times 10^{9}$ poise, from about $5 \times 10^{8}$ poise to about $3 \times 10^{9}$ poise, from about $5 \times 10^{8}$ poise to about $2 \times 10^{9}$ poise, from about $5 \times 10^{8}$ poise to about $1 \times 10^{9}$ poise, from about $5 \times 10^{8}$ poise to about $9 \times 10^{8}$ poise, from about $5 \times 10^{8}$ poise to about $8 \times 10^{8}$ poise, or from about $5 \times 10^{8}$ poise to about $7 \times 10^{8}$ poise.

One or both the first sag depth 418 and the second sag depth 428 can be about 2 mm or greater. For example, one or both the first sag depth 418 and the second sag depth 428 can be in a range from about 2 mm to about 30 mm, from about 4 mm to about 30 mm, from about 5 mm to about 30 mm, from about 6 mm to about 30 mm, from about 8 mm to about 30 mm, from about 10 mm to about 30 mm, from about 12 mm to about 30 mm, from about 14 mm to about 30 mm, from about 15 mm to about 30 mm, from about 2 mm to about 28 mm, from about 2 mm to about 26 mm, from about 2 mm to about 25 mm, from about 2 mm to about 24 mm, from about 2 mm to about 22 mm, from about 2 mm to about 20 mm, from about 2 mm to about 18 mm, from about 2 mm to about 16 mm, from about 2 mm to about 15 mm, from about 2 mm to about 14 mm, from about 2 mm to about 12 mm, from about 2 mm to about 10 mm, from about 2 mm to about 8 mm, from about 6 mm to about 20 mm, from about 8 mm to about 18 mm, from about 10 mm to about 15 mm, from about 12 mm to about 22 mm, from about 15 mm to about 25 mm, or from about 18 mm to about 22 mm.

The first sag depth 418 and the second sag depth 428 can be substantially equal to one another. The first sag depth is within 10% of the second sag depth. For example, the first sag depth is within 9%, within 8%, within 7%, within 6% or within 5% of the second sag depth. For illustration, the second sag depth can be about 15 mm, and the first sag depth can be in a range from about 14.5 mm to about 16.5 mm (or within 10% of the second sag depth).

The first curved glass layer and the second curved glass layer can comprise a shape deviation therebetween of ± 5 mm or less as measured by an optical three-dimensional scanner such as the ATOS Triple Scan supplied by GOM GmbH, located in Braunschweig, Germany. The shape deviation is measured between the second surface 414 and the third surface 422, or between the first surface 412 and the fourth surface 424. The shape deviation between the first glass layer and the second glass layer is about ± 4 mm or less, about ±3 mm or less, about ± 2 mm or less, about ± 1 mm or less, about ± 0.8 mm or less, about ± 0.6 mm or less, about ± 0.5 mm or less, about ± 0.4 mm or less, about ± 0.3 mm or less, about ± 0.2 mm or less, or about ± 0.1 mm or less. As used herein, the shape deviation refers to the maximum shape deviation measured on the respective surfaces.

In one or more embodiments, one of or both the first major surface 412 and the fourth major surface 424 exhibit minimal optical distortion. For example, one of or both the first major surface 412 and the fourth major surface 424 exhibit optical distortion of less than about 400 millidiopters, less than about 300 millidiopters, or less than about 250 millidiopters, as measured by an optical distortion detector using transmission optics according to ASTM 1561. A suitable optical distortion detector is supplied by ISRA VISIION AG, located in Darmstadt, Germany, under the tradename SCREENSCAN-Faultfinder. In one or more embodiments, one of or both the first major surface 312 and the fourth major surface 324 exhibit optical distortion of about 190 millidiopters or less, about 180 millidiopters or less, about 170 millidiopters or less, about 160 millidiopters or less, about 150 millidiopters or less, about 140 millidiopters or less, about 130 millidiopters or less, about 120 millidiopters or less, about 110 millidiopters or less, about 100 millidiopters or less, about 90 millidiopters or less, about 80 millidiopters or less, about 70 millidiopters or less, about 60 millidiopters or less, or about 50 millidiopters or less. As used herein, the optical distortion refers to the maximum optical distortion measured on the respective surfaces.

The third major surface or the fourth major surface of the second curved glass layer exhibits low membrane tensile stress. Membrane tensile stress can occur during cooling of curved layers and laminates. As the glass cools, the major surfaces and edge surfaces (orthogonal to the major surfaces) can develop surface compression, which is counterbalanced by a central region exhibiting a tensile stress. Bending or shaping can introduce additional surface tension near the edge and causes the central tensile region to approach the glass surface. Accordingly, membrane tensile stress is the tensile stress measured near the edge (e.g., about 10-25 mm from the edge surface). The membrane tensile stress at the third major surface or the fourth major surface of the second curved glass layer is less than about 7 MPa as measured by a surface stress meter according to ASTM C1279. An example of such a surface stress meter is supplied by Strainoptic Technologies under the trademark GASP® (Grazing Angle Surface Polarimeter). The membrane tensile stress at the third major surface or the fourth major surface of the second curved glass layer is about 6 MPa or less, about 5 MPa or less, about 4 MPa or less, or about 3 MPa or less. The lower limit of membrane tensile stress is about 0.01 MPa or about 0.1 MPa.

The membrane compressive stress at the third major surface or the fourth major surface of the second curved glass layer is less than about 7 MPa as measured by a surface stress meter according to ASTM C1279. A surface stress meter such as the surface stress meter supplied by Strainoptic Technologies under the trademark GASP® (Grazing Angle Surface Polarimeter) can be used. The membrane compressive stress at the third major surface or the fourth major surface of the second curved glass layer is about 6 MPa or less, about 5 MPa or less, about 4 MPa or less, or about 3 MPa or less. The lower limit of membrane compressive stress is about 0.01 MPa or about 0.1 MPa.

The laminate 400 can have a thickness of 6.85 mm or less, or 5.85 mm or less, where the thickness comprises the sum of thicknesses of the first curved glass layer, the second curved glass layer, the interlayer (and any other layers). In various embodiments, the laminate can have a thickness in the range of about 1.8 mm to about 6.85 mm, or in the range of about 1.8 mm to about 5.85 mm, or in the range of about 1.8 mm to about 5.0 mm, or 2.1 mm to about 6.85 mm, or in the range of about 2.1 mm to about 5.85 mm, or in the range of about 2.1 mm to about 5.0 mm, or in the range of about 2.4 mm to about 6.85 mm, or in the range of about 2.4 mm to about 5.85 mm, or in the range of about 2.4 mm to about 5.0 mm, or in the range of about 3.4 mm to about 6.85 mm, or in the range of about 3.4 mm to about 5.85 mm, or in the range of about 3.4 mm to about 5.0 mm.

The laminate 400 can exhibit at least one radius of curvature that is less than 1000 mm, or less than 750 mm, or less than 500 mm, or less than 300 mm. The laminate 300 exhibits at least one radius of curvature of about 10 m or less, or about 5 m or less along at least one axis. The laminate 400 can have a radius of curvature of 5 m or less along at least a first axis and along the second axis that is perpendicular to the first axis. The laminate can have a radius of curvature of 5 m or less along at least a first axis and along the second axis that is not perpendicular to the first axis.

The first curved glass layer 410 can be relatively thin in comparison to the second curved glass layer 420. In other words, the second curved glass layer has a thickness greater than the first curved glass layer. The second thickness is more than two times the first thickness. The second thickness is in the range from about 1.5 times to about 10 times the first thickness (e.g., from about 1.75 times to about 10 times, from about 2 times to about 10 times, from about 2.25 times to about 10 times, from about 2.5 times to about 10 times, from about 2.75 times to about 10 times, from about 3 times to about 10 times, from about 3.25 times to about 10 times, from about 3.5 times to about 10 times, from about 3.75 times to about 10 times, from about 4 times to about 10 times, from about 1.5 times to about 9 times, from about 1.5 times to about 8 times, from about 1.5 times to about 7.5 times, from about 1.5 times to about 7 times, from about 1.5 times to about 6.5 times, from about 1.5 times to about 6 times, from about 1.5 times to about 5.5 times, from about 1.5 times to about 5 times, from about 1.5 times to about 4.5 times, from about 1.5 times to about 4 times, from about 1.5 times to about 3.5 times, from about 2 times to about 7 times, from about 2.5 times to about 6 times, from about 3 times to about 6 times).

The first curved glass layer 410 and the second curved glass layer 420 can have the same thickness. For example, the second curved glass layer is more rigid or has a greater stiffness than the first curved glass layer, and in very specific embodiments, both the first curved glass layer and the second curved glass layer have a thickness in the range of 0.2 mm and 1.6 mm. Either one or both the first thickness 416 and the second thickness 426 can be less than 1.6 mm (e.g., 1.55 mm or less, 1.5 mm or less, 1.45 mm or less, 1.4 mm or less, 1.35 mm or less, 1.3 mm or less, 1.25 mm or less, 1.2 mm or less, 1.15 mm or less, 1.1 mm or less, 1.05 mm or less, 1 mm or less, 0.95 mm or less, 0.9 mm or less, 0.85 mm or less, 0.8 mm or less, 0.75 mm or less, 0.7 mm or less, 0.65 mm or less, 0.6 mm or less, 0.55 mm or less, 0. 5mm or less, 0.45 mm or less, 0. 4 mm or less, 0.35 mm or less, 0. 3 mm or less, 0.25 mm or less, 0.2 mm or less, 0.15 mm or less, or about 0.1 mm or less). The lower limit of thickness can be 0.1 mm, 0. 2mm or 0.3 mm. In some embodiments, either one or both the first thickness) and the second thickness is in the range from about 0.1 mm to less than about 1.6 mm, from about 0.1 mm to about 1.5 mm, from about 0.1 mm to about 1.4 mm, from about 0.1 mm to about 1.3 mm, from about 0.1 mm to about 1.2 mm, from about 0.1 mm to about 1.1 mm, from about 0.1 mm to about 1 mm, from about 0.1 mm to about 0.9 mm, from about 0.1 mm to about 0.8 mm, from about 0.1 mm to about 0.7 mm, from about 0.1 mm, from about 0.2 mm to less than about 1.6 mm, from about 0.3 mm to less than about 1.6 mm, from about 0.4 mm to less than about 1.6 mm, from about 0.5 mm to less than about 1.6 mm, from about 0.6 mm to less than about 1.6 mm, from about 0.7 mm to less than about 1.6 mm, from about 0.8 mm to less than about 1.6 mm, from about 0.9 mm to less than about 1.6 mm, or from about 1 mm to about 1.6 mm.

While one of the first thickness 416 and the second thickness 426 is less than about 1.6 mm, the other of the first thickness and the second thickness can be about 1.6 mm or greater. For example, the first thickness and the second thickness can differ from one another. For example, the while one of the first thickness 416 and the second thickness 426 is less than about 1.6 mm, the other of the first thickness and the second thickness is about 1.7 mm or greater, about 1.75 mm or greater, about 1.8 mm or greater, about 1.7 mm or greater, about 1.7 mm or greater, about 1.7 mm or greater, about 1.85 mm or greater, about 1.9 mm or greater, about 1.95 mm or greater, about 2 mm or greater, about 2.1 mm or greater, about 2.2 mm or greater, about 2.3 mm or greater, about 2.4 mm or greater, 2.5 mm or greater, 2.6 mm or greater, 2.7 mm or greater, 2.8 mm or greater, 2.9 mm or greater, 3 mm or greater, 3.2 mm or greater, 3.4 mm or greater, 3.5 mm or greater, 3.6 mm or greater, 3.8 mm or greater, 4 mm or greater, 4.2 mm or greater, 4.4 mm or greater, 4.6 mm or greater, 4.8 mm or greater, 5 mm or greater, 5.2 mm or greater, 5.4 mm or greater, 5.6 mm or greater, 5.8 mm or greater, or 6 mm or greater. In some embodiments the first thickness or the second thickness can be in a range from about 1.6 mm to about 6 mm, from about 1.7 mm to about 6 mm, from about 1.8 mm to about 6 mm, from about 1.9 mm to about 6 mm, from about 2 mm to about 6 mm, from about 2.1 mm to about 6 mm, from about 2.2 mm to about 6 mm, from about 2.3 mm to about 6 mm, from about 2.4 mm to about 6 mm, from about 2.5 mm to about 6 mm, from about 2.6 mm to about 6 mm, from about 2.8 mm to about 6 mm, from about 3 mm to about 6 mm, from about 3.2 mm to about 6 mm, from about 3.4 mm to about 6 mm, from about 3.6 mm to about 6 mm, from about 3.8 mm to about 6 mm, from about 4 mm to about 6 mm, from about 1.6 mm to about 5.8 mm, from about 1.6 mm to about 5.6 mm, from about 1.6 mm to about 5.5 mm, from about 1.6 mm to about 5.4 mm, from about 1.6 mm to about 5.2 mm, from about 1.6 mm to about 5 mm, from about 1.6 mm to about 4.8 mm, from about 1.6 mm to about 4.6 mm, from about 1.6 mm to about 4.4 mm, from about 1.6 mm to about 4.2 mm, from about 1.6 mm to about 4 mm, from about 3.8 mm to about 5.8 mm, from about 1.6 mm to about 3.6 mm, from about 1.6 mm to about 3.4 mm, from about 1.6 mm to about 3.2 mm, or from about 1.6 mm to about 3 mm.

The laminate 400 can be substantially free of visual distortion as measured by ASTM C1652/C1652M. In specific embodiments, the laminate, the first curved glass layer 410 and/or the second curved glass layer 420 are substantially free of wrinkles or distortions that can be visually detected by the naked eye, according to ASTM C1652/C1652M.

The third major surface 422 or the fourth major surface 424 can comprise a surface compressive stress of less than 3 MPa as measured by a FSM surface stress meter. In some embodiments, the second curved glass layer is unstrengthened as will be described herein (but may optionally be annealed), and exhibits a surface compressive stress of less than about 3 MPa, or about 2.5 MPa or less, 2 MPa or less, 1.5 MPa or less, 1 MPa or less, or about 0.5 MPa or less, as measured on the third surface 422 or the fourth surface 424. In some embodiments, such surface compressive stress ranges are present on both the third major surface and the fourth major surface.

Either one or both the first curved glass layer 410 and the second curved glass layer 420 can be strengthened, as described herein. The first curved glass layer can comprise a strengthened glass article according to the embodiments described herein, while the second curved glass layer is not strengthened. The first curved glass layer can comprise a strengthened glass article according to the embodiments described herein, while the second curved glass layer is annealed. The first curved glass layer can be strengthened chemically, mechanically and/or thermally, while the second curved glass layer is strengthened in different manner than the first curved glass layer (chemically, mechanically and/or thermally). The first curved glass layer can be strengthened chemically, mechanically and/or thermally, while the second curved glass layer is strengthened in the same manner than the first curved glass layer (chemically, mechanically and/or thermally). The first curved glass layer can be strengthened and the second curved glass layer is not strengthened. The first curved glass layer can be strengthened and the second curved glass layer is annealed. Or both the first curved glass layer and the second curved glass layer can be strengthened (either in the same manner or differently from one another). The second curved glass layer can comprise a soda lime silicate glass, while the first glass substrate can be characterized as including one or more embodiments of the glass article described herein.

The first curved glass layer 410 can comprise a first length and a first width wherein, either one of or both the first length and the first width is about 0.25 meters or greater. The second curved glass layer 420 comprises a second length that is within 5% of the first length, and a second width that is within 5% of the first width. The laminate 400 can be described as curved or complexly curved, as defined herein.

The laminate 400 can be automotive glazing or architectural glazing.

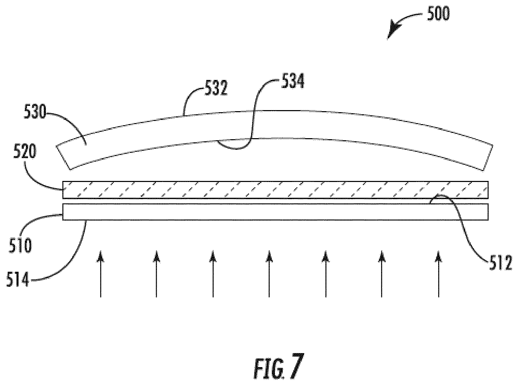

The instant disclosure also relates to a vehicle including a body defining an interior and an opening in communication with the interior; and laminate 400 disposed in the opening. In such embodiments, the laminate 400 can be complexly curved or simply curved, as defined herein. The instant disclosure also relates to a laminate 500 in which a first glass layer comprising an embodiment of a glass article described herein can be cold-formed (with an intervening interlayer) to a second glass layer. An example of a cold-formed laminate 500 is shown in FIGS. 7-8, a first glass layer 510 (including a glass article according to one or more embodiments) is laminated to a relatively thicker and curved second glass layer 530. In FIG. 7, second glass layer 530 includes a first surface 532 and a second surface 534 in contact with an interlayer 520, and the first glass layer 510 includes a third surface 512 in contact with the interlayer 520 and a fourth surface 514. An indicator of a cold-formed laminate is the fourth surface 514 has a greater surface CS than the third surface 512. Accordingly, a cold-formed laminate can comprise a high compressive stress level on fourth surface 514 making this surface more resistant to fracture.

Prior to the cold-forming process, the respective compressive stresses in the third surface 512 and fourth surface 514 can be substantially equal. The first glass layer can be unstrengthened, the third surface 512 and the fourth surface 514 can exhibit no appreciable compressive stress, prior to cold-forming. When the first glass layer 510 is strengthened (as described herein), the third surface 512 and the fourth surface 514 can exhibit substantially equal compressive stress with respect to one another, prior to cold-forming. After cold-forming, the compressive stress on the fourth surface 514 can increase (e.g., the compressive stress on the fourth surface 514 is greater after cold-forming than before cold-forming). Without being bound by theory, the cold-forming process increases the compressive stress of the glass layer being shaped (i.e., the first glass layer) to compensate for tensile stresses imparted during bending and/or forming operations. The cold-forming process causes the third surface of that glass layer (i.e., the third surface 512) to experience tensile stresses, while the fourth surface of the glass layer (i.e., the fourth surface 514) experiences compressive stresses.

When a strengthened first glass layer 510 is utilized, the third and fourth surfaces (512, 514) are already under compressive stress, and thus the third surface 512 can experience greater tensile stress. This allows for the strengthened first glass layer 510 to conform to more tightly curved surfaces.

The first glass layer 510 has a thickness less than the second glass layer 530. This thickness differential means the first glass layer 510 is more flexible to conform to the shape of the second glass layer 530. Moreover, a thinner first glass layer 510 may deform more readily to compensate for shape mismatches and gaps created by the shape of the second glass layer 530. In one or more embodiments, a thin and strengthened first glass layer 510 exhibits greater flexibility especially during cold-forming. The first glass layer 510 conforms to the second glass layer 530 to provide a substantially uniform distance between the second surface 534 and the third surface 512, which is filled by the interlayer.

The cold-formed laminate 500 can be formed using a cold forming process that is performed at a temperature at or just above the softening temperature of the interlayer material (e.g., 520) (e.g., about 100°C to about 120°C), that is, at a temperature less than the softening temperature of the respective glass layers. In one embodiment as shown in FIG. 7, the cold-formed laminate can be formed by: placing an interlayer between the second glass layer (which is curved) and a first glass layer (which can be flat) to form a stack; applying pressure to the stack to press the second glass layer against the interlayer layer which is pressed against the first glass layer; and heating the stack to a temperature below 400°C to form the cold-formed laminate in which the second glass layer conforms in shape to the first glass layer. Such a process can occur using a vacuum bag or ring in an autoclave or another suitable apparatus. The stress of an exemplary first glass layer 510 may change from substantially symmetrical to asymmetrical according to the present disclosure.

As used herein, "flat" and "planar" are used interchangeably and mean a shape having curvature less than a curvature at which lamination defects are created due to curvature mismatch, when such a flat layer is cold-formed to another layer (i.e., a radius of curvature of greater than or equal to about 3 meters, greater than or equal to about 4 meters or greater than or equal to about 5 meters). A flat layer has the foregoing shape when placed on a surface. As used herein, a "simple curve" or "simply curved" means a non-planar shape having curvature along one axis (forming a cylindrical shape or bend). As used herein "complex curve" and "complexly curved" mean a non-planar shape having curvature along two orthogonal axes that are different from one another. Examples of complexly curved shapes include having simple or compound curves, also referred to as non-developable shapes, which include, but are not limited to, spherical, aspherical, and toroidal. The complexly curved shapes may also include segments or portions of such surfaces, or be comprised of a combination of such curves and surfaces. In one or more embodiments, a laminate can have a simple curve or complex curve. In one or more embodiments the first glass layer, the second glass layer, the laminate or a combination thereof can have a simple curve or complexly curved shape and can be cold-formed. As a non-limiting example, the simply-curved laminate can have length and width dimensions of 0.5 m by 1.0 m and a radius of curvature of 2 to 5 m along a single axis.

A complexly curved laminate can have a distinct radius of curvature in two independent directions. According to one or more embodiments, complexly curved laminates may thus be characterized as having "cross curvature," where the laminate is curved along an axis (i.e., a first axis) that is parallel to a given dimension and also curved along an axis (i.e., a second axis) that is perpendicular to the same dimension. The curvature of the laminate can be even more complex when a significant minimum radius is combined with a significant cross curvature, and/or depth of bend. Some laminates may also include bending along axes that are not perpendicular to one another. As a non-limiting example, the complexly-curved laminate can have length and width dimensions of 0.5 m by 1.0 m and a radius of curvature of 2 to 2.5 m along the minor axis, and a radius of curvature of 4 to 5 m along the major axis. The complexly-curved laminate can have a radius of curvature of 5 m or less along at least one axis. The complexly-curved laminate can have a radius of curvature of 5 m or less along at least a first axis and along the second axis that is perpendicular to the first axis. The complexly-curved laminate can have a radius of curvature of 5 m or less along at least a first axis and along the second axis that is not perpendicular to the first axis.

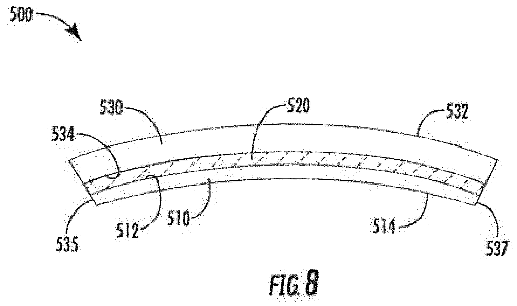

As shown in FIG. 8, first glass layer 510 can be simply-curved or complexly-curved and have at least one concave surface (e.g., surface 514) providing a fourth surface of the laminate and at least one convex surface (e.g., surface 512) to provide a third surface of the laminate opposite the first surface with a thickness therebetween. In the cold-forming embodiment, the second glass sheet 530 can be complexly-curved and have at least one concave surface (e.g., second surface 534) and at least one convex surface (e.g., first surface 532) with a thickness therebetween.

One or more of interlayer 520, first glass layer 510, and second glass layer 530 comprise a first edge (e.g., 535) with a first thickness and a second edge (e.g., 537) opposite the first edge with a second thickness greater than the first thickness.

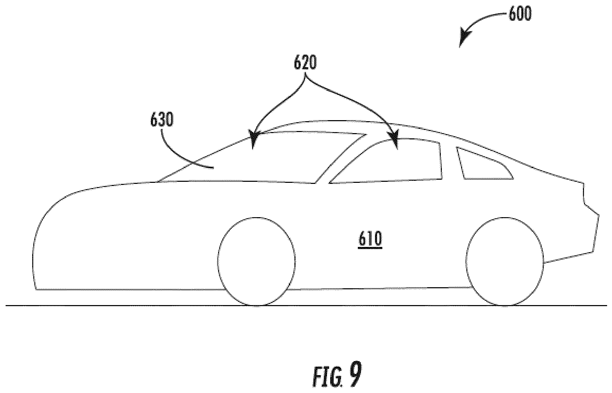

As otherwise described herein, one aspect of this disclosure pertains to a vehicle that includes the glass articles or laminates described herein. For example, FIG. 9 shows a vehicle 600 comprising a body 610 defining an interior, at least one opening 620 in communication with the interior, and a window disposed in the opening, wherein the window comprises a laminate or a glass article 630, according to one or more embodiments described herein. The laminate or glass article 630 may form the sidelights, windshields, rear windows, windows, rearview mirrors, and sunroofs in the vehicle. In some embodiments, the laminate or glass article 630 may form an interior partition (not shown) within the interior of the vehicle, or can be disposed on an exterior surface of the vehicle and form an engine block cover, headlight cover, taillight cover, door panel cover, or pillar cover. The vehicle can include an interior surface (not shown, but can include door trim, seat backs, door panels, dashboards, center consoles, floor boards, rear view mirror and pillars), and the laminate or glass article 630 described herein is disposed on the interior surface. In one or more embodiment, the interior surface includes a display and/or touch panel and the glass layer is disposed over the display. As used herein, vehicle includes automobiles, rolling stock, locomotive, boats, ships, and airplanes, helicopters, drones, space craft and the like.

The instant disclosure also relates to an architectural application that includes the glass articles or laminates described herein. In some embodiments, the architectural application includes balustrades, stairs, decorative panels or covering for walls, acoustic panels or coverings, columns, partitions, elevator cabs, household appliances, windows, furniture, and other applications, formed at least partially using a laminate or glass article according to one or more embodiments.

The portion of the laminate including the glass article can be positioned within a vehicle or architectural application such that the glass article faces the interior of the vehicle or the interior of a building or room, such that the glass article is adjacent to the interior (and the other glass ply is adjacent the exterior). In some embodiments, the glass article of the laminate is in direct contact with the interior (i.e., the surface of the glass article facing the interior is bare and is free of any coatings).

The portion of the laminate including the glass article can be positioned within a vehicle or architectural application such that the glass article faces the exterior of the vehicle or the exterior of a building or room, such that the glass article is adjacent to the exterior (and the other glass ply is adjacent the interior). In some embodiments, the glass article of the laminate is in direct contact with the exterior (i.e., the surface of the glass article facing the exterior is bare and is free of any coatings).

The glass articles and/or laminates described herein can have added functionality in terms of incorporating display aspects (e.g., heads up display, projection surfaces, and the like), antennas, solar insulation, acoustic performance (e.g., sound dampening), anti-glare performance, anti-reflective performance, scratch-resistance and the like. Such functionality can be imparted by coatings or layers applied to the exposed surfaces of the laminate or to interior (unexposed) surfaces (e.g., between the glass layers or between a glass layer and an interlayer). In some embodiments, the laminate can have a thickness or configuration to enable improved optical performance when the laminate is used as a heads-up display (e.g., by incorporating a wedged shaped polymer interlayer between the glass layers or by shaping one of the glass layers to have a wedged shape). The laminate can include a textured surface that provides anti-glare functionality and such textured surface can be disposed on an exposed surface or an interior surface that is unexposed. The laminate can include an anti-reflective coating, a scratch-resistant coating or a combination thereof disposed on an exposed surface. The laminate can include an antenna disposed on an exposed surface, and interior surface that is not exposed or embedded in any one of the glass layers. The interlayer can be modified to have one or more of the following properties: ultraviolet (UV) absorption, infrared (IR) absorption, IR reflection, acoustic control/dampening, adhesion promotion, and tint. The interlayer can be modified by a suitable additive such as a dye, a pigment, dopants, etc. to impart the desired property.

In a first example (referring to FIGS. 5, 7 or 9), the laminate includes a first glass layer 310, 410, 510 comprising a glass article according to one or more embodiments, a second glass layer 330, 430, 520 comprising a SLG article, and an interlayer 320, 420, 530 comprising PVB. The glass article used in the first layer has a thickness of about 1 mm or less. In some embodiments, the glass article in the first layer is chemically strengthened. In some embodiments, the SLG article used in the second glass layer is annealed. The laminate is positioned in a vehicle such that the first glass layer (comprising the glass article according to one or more embodiments) faces the interior of the vehicle.

In a second example (referring to FIGS. 5, 7 or 9), the laminate includes a first glass layer 310, 410, 510 comprising a glass article according to one or more embodiments, a second glass layer 330, 430, 520 comprising a SLG article, and an interlayer 320, 420, 530 comprising PVB. The glass article used in the first layer has a thickness of about 1 mm or less. In some embodiments, the glass article in the first layer is thermally strengthened. In some embodiments, the SLG article used in the second glass layer is annealed. The laminate is positioned in a vehicle such that the first glass layer (comprising the glass article according to one or more embodiments) faces the interior of the vehicle.

The instant disclosure also relates to a method for forming the laminate including a glass article as described herein. The method includes stacking a first glass article according to any one or more embodiments described herein, and a second glass article that differs from the first glass article to form a stack, wherein the first glass layer comprises a first surface and an second surface that opposes the first surface, and the second glass article comprises a third surface and a fourth surface that opposes the third surface, and wherein the second surface is adjacent to the third surface. The first glass article and the second glass article differ in any one or more of composition, thickness, strengthening level, and forming method. The method includes placing the stack on a mold, heating the stack to a temperature at which the second glass article exhibits a viscosity of $10^{10}$ poise to form a shaped stack, and placing an interlayer between the first glass article and the second glass layer. The shaped stack comprises a gap between the second surface and the third surface having a maximum distance of about 10 mm or less, 5 mm or less, or about 3 mm or less. The second glass article is a SLG article. The first glass article has a thickness of less than 1.6 mm (e.g., 1.5 mm or less, 1 mm or less, 0.7 mm or less, or 0.5 mm or less) and the second glass article has a thickness of 1.6 mm or greater (e.g., 1.8 mm or more, 2.0 mm or greater or 2.1 mm or greater). The first glass article is fusion formed and the second glass article is float formed.

Another aspect of this disclosure pertains to devices that include the glass articles or laminates described herein. For example, the devices can include any device including a display. In one or more embodiments the devices are electronic devices, which can include mobile devices such as mobile phones, laptops, tablets, mp3 players, navigation devices and the like, or stationary devices such as computers, electronic displays, in vehicle information/entertainment systems, billboards, point of sale systems, navigation systems, and the like. An exemplary electronic device includes a housing having front, back, and side surfaces; electrical components that are at least partially inside or entirely within the housing and including at least a controller, a memory, and a display at or adjacent to the front surface of the housing. The glass articles or laminates described herein can be disposed at or over the front surface of the housing such that it is over the display (i.e., forming a cover over the display). In some embodiments, the glass article or laminate can be used as a back cover.

**EXAMPLES**

The instant disclosure can be further understood by making reference to the following examples.

Table 1. Compositions and Properties of Comparative Examples 1 and 2 and Examples 1-5

| Glass | C1 | C2 | 1 | 2 | 3 | 4 | 5 |
|---|---|---|---|---|---|---|---|
| $SiO_2$ | 65.27 | 66.20 | 64.52 | 65.54 | 65.23 | 64.41 | 65.41 |
| $Al_2O_3$ | 9.68 | 9.00 | 9.65 | 8.62 | 9.64 | 9.65 | 8.66 |
| $P_2O_5$ | 0.49 | 0.00 | 0.49 | 0.48 | 0.50 | 0.50 | 0.50 |
| $Li_2O$ | 0.00 | 0.00 | 1.00 | 1.00 | 1.03 | 0.00 | 0.00 |
| $Na_2O$ | 17.01 | 16.74 | 16.96 | 16.95 | 15.99 | 16.95 | 16.95 |
| $K_2O$ | 2.00 | 2.32 | 1.95 | 1.95 | 1.99 | 1.98 | 1.97 |
| MgO | 2.54 | 3.60 | 2.46 | 2.47 | 2.51 | 2.49 | 2.50 |
| CaO | 0.03 | 0.04 | 0.04 | 0.04 | 0.04 | 0.98 | 0.97 |
| ZnO | 2.77 | 1.87 | 2.72 | 2.72 | 2.85 | 2.83 | 2.83 |
| SrO | 0.00 | 0.00 | 0.00 | 0.00 | 0.00 | 0.00 | 0.00 |
| BaO | 0.00 | 0.00 | 0.00 | 0.00 | 0.00 | 0.00 | 0.00 |
| $TiO_2$ | 0.00 | 0.00 | 0.00 | 0.00 | 0.00 | 0.00 | 0.00 |
| $ZrO_2$ | 0.00 | 0.00 | 0.00 | 0.00 | 0.00 | 0.00 | 0.00 |
| $SnO_2$ | 0.20 | 0.21 | 0.21 | 0.21 | 0.21 | 0.20 | 0.20 |
| F | 0.00 | 0.00 | 0.00 | 0.00 | 0.00 | 0.00 | 0.00 |
| Cl | 0.00 | 0.00 | 0.00 | 0.00 | 0.00 | 0.00 | 0.00 |
| **Properties** | | | | | | | |
| beta-OH | | | 0.147 | 0.119 | | | |
| Strain Point (°C) | 534 | 523 | 498 | 487 | 508 | 526 | 513 |
| Annealing Point (°C) | 579 | 570 | 544 | 531 | 553 | 571 | 558 |
| Softening Point (°C) | 794 | 784 | 763 | 749 | 776 | 786 | 768 |
| $(T_{soft}+T_{anneal})/2$ (°C) | 687 | 677 | 654 | 640 | 665 | 679 | 663 |
| CTE ($10^{-07}$) (1/K) | 97.8 | 99.0 | 100.3 | 99.5 | 97.3 | 105.3 | 97.6 |
| Density at 20 (°C) | 2.509 | | 2.514 | 2.512 | 2.509 | 2.519 | 2.516 |
| SOC (546.1 nm) | 29.97 | 29.46 | 29.22 | 29.20 | 29.70 | 29.93 | 29.63 |
| Refractive index (589 nm) | 1.5081 | 1.5084 | 1.5107 | 1.5099 | 1.5093 | 1.5112 | 1.5092 |
| HTV | | | | | | | |
| A | -2.415 | -2.060 | -2.232 | -2.139 | -2.118 | -2.309 | -1.950 |
| B | 6699.0 | 5989.0 | 6358.0 | 6125.5 | 6230.3 | 6368.3 | 5726.5 |
| To | 116.3 | 158.7 | 104.2 | 109.4 | 129.5 | 132.0 | 167.2 |
| T 200P (°C) | 1537 | 1532 | 1507 | 1489 | 1539 | 1513 | 1514 |
| T 35kP (°C) | 1079 | 1066 | 1043 | 1026 | 1065 | 1061 | 1049 |
| T50kP (°C) | 1058 | 1045 | 1022 | 1005 | 1043 | 1041 | 1028 |
| T100kP (°C) | 1020 | 1007 | 983 | 967 | 1005 | 1003 | 991 |
| T 200kP (°C) | 984 | 972 | 948 | 933 | 969 | 969 | 957 |
| HTV +BBV | | | | | | | |
| A | -1.883 | -1.776 | -1.831 | -1.812 | -1.859 | -1.881 | -1.749 |

(continued)

| Properties | | | | | | | |
|---|---|---|---|---|---|---|---|
| B | 5558.14 | 5377.71 | 5485.66 | 5423.60 | 5676.26 | 5465.15 | 5301.70 |
| To | 213.72 | 214.97 | 182.17 | 172.60 | 178.01 | 210.62 | 206.75 |
| T $\log_{10}$ (°C) | 681 | 672 | 646 | 632 | 657 | 671 | 658 |
| T $\log_{11}$ (°C) | 645 | 636 | 610 | 596 | 619 | 635 | 623 |
| Tog$_{12}$ (°C) | 614 | 605 | 579 | 565 | 588 | 604 | 592 |

Table 2. Compositions and Properties of Examples 6-11

| Glass | 6 | 7 | 8 | 9 | 10 | 11 |
|---|---|---|---|---|---|---|
| $SiO_2$ | 65.40 | 65.39 | 65.47 | 65.44 | 65.36 | 65.37 |
| $Al_2O_3$ | 9.66 | 9.63 | 9.61 | 9.63 | 9.63 | 9.64 |
| $P_2O_5$ | 0.50 | 0.50 | 0.50 | 0.50 | 0.50 | 0.50 |
| $Li_2O$ | 0.00 | 0.00 | 0.00 | 0.00 | 0.00 | 0.00 |
| $Na_2O$ | 15.93 | 16.94 | 16.95 | 16.92 | 16.88 | 16.87 |
| $K_2O$ | 1.98 | 1.04 | 1.97 | 1.98 | 1.99 | 1.99 |
| MgO | 2.51 | 2.49 | 1.48 | 2.49 | 2.51 | 2.51 |
| CaO | 0.98 | 0.98 | 0.98 | 0.97 | 0.05 | 0.04 |
| ZnO | 2.82 | 2.83 | 2.83 | 1.86 | 1.86 | 1.88 |
| SrO | 0.00 | 0.00 | 0.00 | 0.00 | 1.00 | 0.00 |
| BaO | 0.00 | 0.00 | 0.00 | 0.00 | 0.00 | 1.00 |
| $TiO_2$ | 0.00 | 0.00 | 0.00 | 0.00 | 0.00 | 0.00 |
| $ZrO_2$ | 0.00 | 0.00 | 0.00 | 0.00 | 0.00 | 0.00 |
| $SnO_2$ | 0.21 | 0.20 | 0.20 | 0.20 | 0.21 | 0.21 |
| F | 0.00 | 0.00 | 0.00 | 0.00 | 0.00 | 0.00 |
| Cl | 0.00 | 0.00 | 0.00 | 0.00 | 0.00 | 0.00 |
| **Properties** | | | | | | |
| beta-OH | | | | | | |
| Strain Point (°C) | 537 | 536 | 523 | 521 | 522 | 518 |
| Annealing Point (°C) | 583 | 582 | 568 | 567 | 567 | 563 |
| Softening Point (°C) | 804 | 799 | 787 | 786 | 784 | 781 |
| ($T_{soft}$+$T_{anneal}$)/2 (°C) | 694 | 691 | 678 | 677 | 676 | 672 |
| CTE (10$^{-07}$) (1/K) | 94.9 | 93.2 | 97.0 | 96.9 | 97.4 | 97.7 |
| Density at 20 (°C) | 2.512 | 2.512 | 2.513 | 2.506 | 2.511 | 2.505 |
| SOC (546.1 nm) | 29.85 | 29.95 | 29.90 | 29.39 | 29.37 | 29.29 |
| Refractive index (589 nm) | 1.5093 | 1.5092 | 1.5092 | 1.5102 | 1.5093 | 1.5093 |
| HTV | | | | | | |
| A | -2.190 | -2.013 | -2.202 | -2.035 | -2.171 | -1.629 |
| B | 6232.4 | 5859.1 | 6325.4 | 5942.6 | 6293.8 | 5209.1 |

(continued)

| Properties | | | | | | |
|---|---|---|---|---|---|---|
| To | 158.5 | 189.6 | 130.2 | 168.5 | 129.2 | 216.4 |
| T 200P (°C) | 1546 | 1548 | 1535 | 1539 | 1537 | 1542 |
| T 35kP (°C) | 1084 | 1083 | 1068 | 1072 | 1066 | 1060 |
| T50kP (°C) | 1063 | 1063 | 1047 | 1051 | 1045 | 1040 |
| T100kP (°C) | 1025 | 1025 | 1008 | $10^{13}$ | 1007 | 1002 |
| T 200kP (°C) | 990 | 991 | 973 | 979 | 972 | 968 |
| HTV +BBV | | | | | | |
| A | -1.864 | -1.861 | -1.788 | -1.876 | -1.724 | -1.633 |
| B | 5549.09 | 5542.36 | 5449.58 | 5607.27 | 5350.96 | 5216.06 |
| To | 217.82 | 217.73 | 206.91 | 198.38 | 212.57 | 215.71 |
| T $\log_{10}$ (°C) | 686 | 685 | 669 | 671 | 669 | 664 |
| T $\log_{11}$ (°C) | 649 | 649 | 633 | 634 | 633 | 629 |
| Tog$_{12}$ (°C) | 618 | 618 | 602 | 602 | 602 | 598 |

Table 3. Compositions and Properties of Examples 12-17

| Glass | 12 | 13 | 14 | 15 | 16 | 17 |
|---|---|---|---|---|---|---|
| $SiO_2$ | 65.03 | 65.17 | 65.40 | 66.10 | 67.26 | 67.16 |
| $Al_2O_3$ | 9.66 | 8.64 | 9.66 | 9.03 | 9.01 | 9.07 |
| $P_2O_5$ | 0.42 | 0.50 | 0.49 | 0.00 | 0.25 | 0.25 |
| $Li_2O$ | 0.00 | 0.00 | 0.00 | 0.00 | 0.00 | 0.00 |
| $Na_2O$ | 16.70 | 17.06 | 16.88 | 16.76 | 16.57 | 16.56 |
| $K_2O$ | 2.00 | 2.00 | 1.96 | 2.33 | 2.77 | 2.78 |
| MgO | 2.43 | 2.55 | 2.51 | 3.62 | 0.00 | 0.01 |
| CaO | 0.03 | 0.04 | 0.04 | 0.04 | 0.02 | 0.02 |
| ZnO | 2.56 | 2.86 | 1.86 | 0.94 | 2.93 | 1.95 |
| SrO | 0.00 | 0.00 | 0.00 | 0.00 | 0.00 | 0.00 |
| BaO | 0.00 | 0.00 | 0.00 | 0.00 | 0.00 | 0.00 |
| $TiO_2$ | 0.97 | 0.99 | 0.99 | 0.96 | 0.98 | 1.98 |
| $ZrO_2$ | 0.00 | 0.00 | 0.00 | 0.00 | 0.00 | 0.00 |
| $SnO_2$ | 0.20 | 0.21 | 0.21 | 0.21 | 0.21 | 0.22 |
| F | 0.00 | 0.00 | 0.00 | 0.00 | 0.00 | 0.00 |
| Cl | 0.00 | 0.00 | 0.00 | 0.00 | 0.00 | 0.00 |
| Properties | | | | | | |
| beta-OH | | | 0.163 | | | |
| Strain Point (°C) | 534 | 525 | 530 | 526 | 511 | 514 |
| Annealing Point (°C) | 579 | 570 | 575 | 571 | 556 | 558 |
| Softening Point (°C) | 790 | 778 | 791 | 781 | 757 | 754 |

(continued)

| Properties | | | | | | |
|---|---|---|---|---|---|---|
| $(T_{soft}+T_{anneal})/2$ (°C) | 685 | 674 | 683 | 676 | 657 | 656 |
| CTE ($10^{-07}$) (1/K) | 97.9 | 98.5 | 97.1 | | | |
| Density at 20 (°C) | | 2.514 | 2.498 | | 2.513 | 2.506 |
| SOC (546.1 nm) | 30.17 | 30.26 | 29.81 | 29.18 | 30.11 | 30.01 |
| Refractive index (589 nm) | 1.5134 | 1.5123 | | 1.5114 | 1.5104 | 1.5154 |
| HTV | | | | | | |
| A | -2.022 | -1.796 | -2.040 | -2.035 | -1.870 | -1.738 |
| B | 5804.2 | 5344.8 | 6075.0 | 6033.5 | 5863.8 | 5646.2 |
| To | 179.1 | 203.5 | 154.7 | 141.7 | 138.9 | 152.2 |
| T 200P (°C) | 1522 | 1508 | 1554 | 1533 | 1545 | 1550 |
| T 35kP (°C) | 1063 | 1047 | 1077 | 1059 | 1053 | 1051 |
| T50kP (°C) | 1043 | 1026 | 1056 | 1038 | 1032 | 1029 |
| T100kP (°C) | 1006 | 990 | 1018 | 999 | 992 | 990 |
| T 200kP (°C) | 972 | 957 | 982 | 964 | 957 | 954 |
| HTV +BBV | | | | | | |
| A | -1.711 | -1.600 | -1.733 | -1.574 | -1.513 | -1.385 |
| B | 5177.73 | 4950.00 | 5413.14 | 5059.92 | 5081.19 | 4896.90 |
| To | 234.97 | 240.85 | 215.13 | 231.82 | 215.01 | 225.19 |
| T $\log_{10}$ (°C) | 677 | 668 | 677 | 669 | 656 | 655 |
| T $\log_{11}$ (°C) | 642 | 634 | 640 | 634 | 621 | 621 |
| Tog$_{12}$ (°C) | 613 | 605 | 609 | 605 | 591 | 591 |
| Liquidus | | | | | | |
| Liquidus Temp. (°C) | | | 820 | | 825 | 865 |
| Liquidus Viscosity (kP) | | | 12337 | | 4749 | 1525 |

Table 4. Compositions and Properties of Examples 18-21

| Glass | 18 | 19 | 20 | 21 |
|---|---|---|---|---|
| $SiO_2$ | 65.39 | 65.37 | 64.96 | 65.48 |
| $Al_2O_3$ | 8.64 | 9.65 | 9.60 | 9.50 |
| $P_2O_5$ | 0.48 | 0.50 | 0.50 | 0.48 |
| $Li_2O$ | 0.00 | 0.00 | 0.00 | 0.00 |
| $Na_2O$ | 16.93 | 16.91 | 16.82 | 16.51 |
| $K_2O$ | 1.99 | 1.97 | 1.95 | 1.88 |
| MgO | 2.52 | 2.50 | 2.45 | 2.45 |
| CaO | 0.04 | 0.04 | 0.04 | 0.04 |
| ZnO | 2.84 | 1.86 | 2.81 | 2.79 |
| SrO | 0.00 | 0.00 | 0.00 | 0.00 |

(continued)

| Glass | 18 | 19 | 20 | 21 |
|---|---|---|---|---|
| BaO | 0.00 | 0.00 | 0.00 | 0.00 |
| $TiO_2$ | 0.00 | 0.00 | 0.00 | 0.00 |
| $ZrO_2$ | 0.95 | 0.98 | 0.00 | 0.00 |
| $SnO_2$ | 0.20 | 0.21 | 0.21 | 0.20 |
| F | 0.00 | 0.00 | 0.62 | 0.00 |
| Cl | 0.00 | 0.00 | 0.00 | 0.63 |
| **Properties** | | | | |
| beta-OH | | 0.148 | 0.150 | 0.139 |
| Strain Point (°C) | 537 | 550 | 515 | 533 |
| Annealing Point (°C) | 584 | 598 | 561 | 580 |
| Softening Point (°C) | 805 | 823 | 782 | 806 |
| $(T_{soft}+T_{anneal})/2$ (°C) | 695 | 711 | 672 | 693 |
| CTE ($10^{-07}$) (1/K) | 97.1 | 95.3 | 96.4 | |
| Density at 20 (°C) | 2.512 | 2.516 | 2.507 | 2.496 |
| SOC (546.1 nm) | 30.36 | 29.95 | 29.99 | 30.25 |
| Refractive index (589 nm) | 1.5133 | | | |
| HTV | | | | |
| A | -2.051 | -2.104 | -2.201 | -2.316 |
| B | 5675.1 | 6050.2 | 6380.9 | 6589.3 |
| To | 215.4 | 197.5 | 124.4 | 134.6 |
| T 200P (°C) | 1519 | 1571 | 1542 | 1562 |
| T 35kP (°C) | 1076 | 1108 | 1070 | 1095 |
| T50kP (°C) | 1056 | 1087 | 1049 | 1074 |
| T100kP (°C) | 1020 | 1049 | 1011 | 1035 |
| T 200kP (°C) | 987 | 1015 | 975 | 1000 |
| HTV +BBV | | | | |
| A | -2.046 | -1.987 | -1.856 | -1.996 |
| B | 5663.37 | 5802.86 | 5640.08 | 5889.11 |
| To | 216.60 | 219.01 | 188.89 | 194.58 |
| T $\log_{10}$ (°C) | 687 | 703 | 665 | 685 |
| T $\log_{11}$ (°C) | 651 | 666 | 628 | 648 |
| T $og_{12}$ (°C) | 620 | 634 | 596 | 615 |

Examples 1-21 are examples of glass compositions made according to the instant disclosure. The glass compositions (in mol%) of Examples 1-21 are provided in Tables 1-4. Table 1 also includes information related to strain point temperature (as measured by beam bending viscometer), annealing point temperature (as measured by beam bending viscometer), softening point temperature (as measured by parallel plate), density at 20°C, CTE, refractive index, and stress optical coefficient (SOC). Similar properties are provided for the comparative examples C1 and C2.

The glasses in Tables 1-4 were prepared by melting batch in a platinum crucible in an electric furnace overnight at 1650°C and pouring onto a steel table. The glass patties were annealed at 575-580°C.

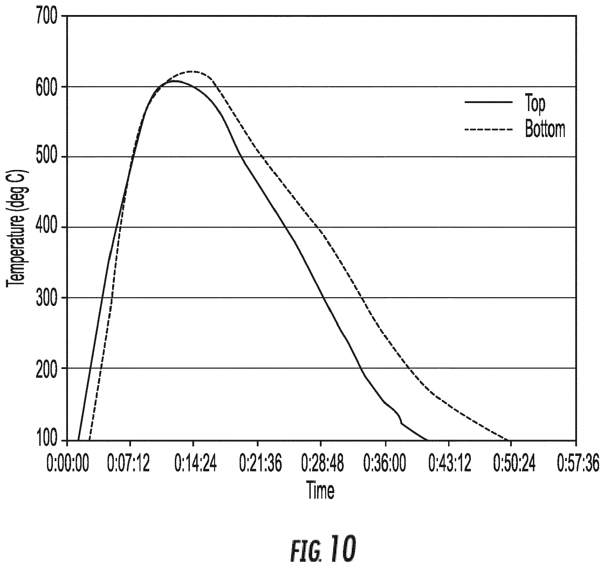

Tables 5-8 show ion exchange data for the glasses in Tables 1-4. All the ion exchanged samples were 0.55 mm thick and ion exchanged in refined KNO$_3$. The glasses were given two different heat treatments prior to ion exchange to obtain a range of fictive temperatures (T$_f$), since CS and DOL are known to change with the T$_f$. "Annealed" means that the sample was cut directly from the as-annealed glass patty. "Fictivated and Lehred" indicates that the finished samples were heat treated for 4 minutes at 622°C, then put through a Lehr with the temperature schedule shown in FIG. 10, which mimics glass temperatures in a sagging process. A standard set of ion exchange conditions was used: 410°C / 4h, 410°C / 6h, 430°C / 2h, and 430°C / 4h. CS and DOL were measured by FSM and values were corrected using the refractive index and stress-optic coefficients shown in Tables 1-4.

To compare the ion exchange behavior of the different glasses, the time required to reach a 40 μm DOL (t$_{40}$) and the CS under those ion exchange conditions (CS$_{40}$) at 410°C or 430°C were calculated using the data in Table 2 and the formulae:

$$\text{Time to 40 μm } (t_{40}) = (t_1 * 1600/DOL_1^2 + t_2 * 1600/DOL_2^2)/2$$

$$\text{CS at 40 μm } (CS_{40}) = CS_1 + (CS_2 - CS_1)/(t_2 - t_1) * (t_{40} - t_1)$$

wherein, t$_1$ = shortest ion exchange time, t$_2$ = longest ion exchange time, CS$_1$ = measured CS at t$_1$, CS$_2$ = measured CS at t$_2$, DOL$_1$ = measured DOL at t$_1$, and DOL$_2$ = measured DOL at t$_2$. Sagging is typically done at temperatures corresponding to the viscosity range 1 x 10$^{10}$ to 1 x 10$^{12}$ poise (Tlog$_{10}$-Tlog$_{12}$). For soda lime glass, these temperatures can range from 570 to 645°C. Tlog$_{11}$, about 595 to 615°C for soda lime glasses, will be used here for comparison purposes. A Tlog$_{11}$ of about 635°C, like for glass C2, has been found to be acceptable for co-sagging of windshield-sized parts.

Table 5. Ion Exchange Data

| Glass | C1 | C2 | 1 | 2 | 3 | 4 | 5 |
|---|---|---|---|---|---|---|---|
| 410°C- 4h, Annealed, 0.55mm | | | | | | | |
| CS (MPa) | 877 | 862 | 820 | 728 | 892 | 914 | 843 |
| DOL(microns) | 36.7 | 34.5 | 30.4 | 31.5 | 27.4 | 31.8 | 32.2 |
| 410°C - 6h, Annealed, 0.55mm | | | | | | | |
| CS (MPa) | 849 | 812 | 779 | 687 | 854 | 873 | 802 |
| DOL(microns) | 44.2 | 44.4 | 35.9 | 37.0 | 34.9 | 39.1 | 39.7 |
| 430°C - 2h, Annealed, 0.55mm | | | | | | | |
| CS (MPa) | 867 | 833 | 794 | 702 | 857 | 883 | 808 |
| DOL(microns) | 32.3 | 32.2 | 27.8 | 27.0 | 25.4 | 29.2 | 29.9 |
| 430°C - 4h, Annealed, 0.55mm | | | | | | | |
| CS (MPa) | 802 | 754 | 712 | 621 | 787 | 814 | 734 |
| DOL(microns) | 46.8 | 47.8 | 39.4 | 40.9 | 37.1 | 41.9 | 43.2 |
| 410°C - 4h, F+Lehr, 0.55mm | | | | | | | |
| CS (MPa) | 801 | 774 | 740 | 658 | 784 | 864 | 782 |
| DOL(microns) | 39.8 | 39.6 | 33.8 | 34.7 | 31.5 | 34.3 | 34.9 |
| 410°C - 6h, F+Lehr, 0.55mm | | | | | | | |
| CS (MPa) | 769 | 736 | 699 | 618 | 752 | 823 | 728 |
| DOL(microns) | 49.5 | 47.6 | 41.6 | 41.6 | 38.6 | 41.9 | 43.3 |
| 430°C - 2h, F+Lehr, 0.55mm | | | | | | | |
| CS (MPa) | 786 | 747 | 725 | 634 | 758 | 826 | 741 |
| DOL(microns) | 35.4 | 35.5 | 30.1 | 30.2 | 28.4 | 32.0 | 30.8 |

(continued)

| Glass | C1 | C2 | 1 | 2 | 3 | 4 | 5 |
|---|---|---|---|---|---|---|---|
| 430°C - 4h, F+Lehr, 0.55mm | | | | | | | |
| CS (MPa) | 732 | 675 | 645 | 548 | 684 | 756 | 672 |
| DOL(microns) | 50.7 | 51.3 | 43.4 | 45.3 | 42.4 | 44.9 | 44.3 |

Table 6. Ion Exchange Data

| Glass | 6 | 7 | 8 | 9 | 10 | 11 |
|---|---|---|---|---|---|---|
| 410°C- 4h, Annealed, 0.55mm | | | | | | |
| CS (MPa) | 935 | 1000 | 867 | 880 | 870 | 852 |
| DOL(microns) | 31.2 | 27.8 | 34.0 | 33.9 | 32.0 | 31.0 |
| 410°C - 6h, Annealed, 0.55mm | | | | | | |
| CS (MPa) | 910 | 961 | 837 | 833 | 831 | 811 |
| DOL(microns) | 36.4 | 34.7 | 41.3 | 41.2 | 39.6 | 37.5 |
| 430°C - 2h, Annealed, 0.55mm | | | | | | |
| CS (MPa) | 916 | 966 | 838 | 840 | 844 | 823 |
| DOL(microns) | 29.1 | 25.6 | 29.6 | 29.6 | 29.8 | 28.0 |
| 430°C - 4h, Annealed, 0.55mm | | | | | | |
| CS (MPa) | 862 | 905 | 760 | 779 | 773 | 745 |
| DOL(microns) | 39.5 | 35.4 | 44.6 | 42.2 | 42.8 | 40.9 |
| 410°C - 4h, F+Lehr, 0.55mm | | | | | | |
| CS (MPa) | 879 | 947 | 803 | 801 | 796 | 776 |
| DOL(microns) | 32.1 | 28.7 | 36.6 | 36.9 | 35.0 | 34.1 |
| 410°C - 6h, F+Lehr, 0.55mm | | | | | | |
| CS (MPa) | 854 | 920 | 758 | 769 | 758 | 739 |
| DOL(microns) | 39.4 | 35.5 | 44.7 | 44.7 | 42.9 | 40.8 |
| 430°C - 2h, F+Lehr, 0.55mm | | | | | | |
| CS (MPa) | 861 | 919 | 768 | 774 | 759 | 743 |
| DOL(microns) | 29.9 | 26.1 | 32.4 | 32.5 | 32.0 | 31.0 |
| 430°C - 4h, F+Lehr, 0.55mm | | | | | | |
| CS (MPa) | 821 | 844 | 696 | 700 | 697 | 680 |
| DOL(microns) | 42.2 | 38.2 | 45.7 | 47.9 | 46.5 | 44.2 |

Table 7. Ion Exchange Data

| Glass | 12 | 13 | 14 | 15 | 16 | 17 |
|---|---|---|---|---|---|---|
| 410°C- 4h, Annealed, 0.55mm | | | | | | |
| CS (MPa) | 919 | 852 | 885 | 843 | 725 | 718 |
| DOL(microns) | 33.9 | 34.4 | 36.2 | 34.6 | 40.6 | 38.3 |
| 410°C - 6h, Annealed, 0.55mm | | | | | | |

(continued)

| Glass | 12 | 13 | 14 | 15 | 16 | 17 |
|---|---|---|---|---|---|---|
| CS (MPa) | 881 | 812 | 843 | 792 | 688 | 680 |
| DOL(microns) | 43.2 | 44.2 | 45.4 | 44.3 | 48.9 | 48.8 |
| 430°C - 2h, Annealed, 0.55mm | | | | | | |
| CS (MPa) | 898 | 826 | 871 | 822 | 702 | 693 |
| DOL(microns) | 31.6 | 32.1 | 31.5 | 32.4 | 36.3 | 36.1 |
| 430°C - 4h, Annealed, 0.55mm | | | | | | |
| CS (MPa) | 824 | 751 | 776 | 743 | 633 | 632 |
| DOL(microns) | 46.4 | 47.5 | 46.9 | 46.9 | 52.5 | 49.8 |
| 410°C - 4h, F+Lehr, 0.55mm | | | | | | |
| CS (MPa) | 839 | 773 | 850 | 771 | 654 | 639 |
| DOL(microns) | 38.9 | 38.5 | 38.4 | 37.7 | 44.1 | 41.9 |
| 410°C - 6h, F+Lehr, 0.55mm | | | | | | |
| CS (MPa) | 802 | 733 | 810 | 732 | 614 | 608 |
| DOL(microns) | 46.7 | 47.4 | 47.1 | 47.7 | 52.6 | 52.0 |
| 430°C - 2h, F+Lehr, 0.55mm | | | | | | |
| CS (MPa) | 818 | 748 | 824 | 742 | 628 | 620 |
| DOL(microns) | 34.5 | 35.1 | 34.1 | 35.5 | 40.0 | 39.5 |
| 430°C - 4h, F+Lehr, 0.55mm | | | | | | |
| CS (MPa) | 738 | 678 | 753 | 678 | 557 | 558 |
| DOL(microns) | 50.1 | 50.8 | 49.3 | 49.1 | 56.0 | 55.1 |

Table 8. Ion Exchange Data

| Glass | 18 | 19 | 20 | 21 |
|---|---|---|---|---|
| 410°C- 4h, Annealed, 0.55mm | | | | |
| CS (MPa) | 917 | 967 | 815 | 915 |
| DOL(microns) | 33.6 | 35.1 | 34.6 | 37.8 |
| 410°C - 6h, Annealed, 0.55mm | | | | |
| CS (MPa) | 879 | 930 | 785 | 870 |
| DOL(microns) | 43.0 | 44.2 | 41.9 | 47.4 |
| 430°C - 2h, Annealed, 0.55mm | | | | |
| CS (MPa) | 896 | 959 | 804 | 892 |
| DOL(microns) | 31.3 | 30.7 | 30.0 | 34.3 |
| 430°C - 4h, Annealed, 0.55mm | | | | |
| CS (MPa) | 824 | 876 | 710 | 808 |
| DOL(microns) | 45.8 | 47.2 | 45.9 | 50.5 |
| 410°C - 4h, F+Lehr, 0.55mm | | | | |
| CS (MPa) | 835 | 951 | 783 | 864 |

(continued)

| Glass | 18 | 19 | 20 | 21 |
|---|---|---|---|---|
| DOL(microns) | 37.6 | 37.2 | 36.9 | 40.5 |
| 410°C - 6h, F+Lehr, 0.55mm | | | | |
| CS (MPa) | 799 | 922 | 746 | 818 |
| DOL(microns) | 46.3 | 44.3 | 45.7 | 50.1 |
| 430°C - 2h, F+Lehr, 0.55mm | | | | |
| CS (MPa) | 813 | 940 | 764 | 844 |
| DOL(microns) | 34.2 | 32.8 | 32.6 | 36.1 |
| 430°C - 4h, F+Lehr, 0.55mm | | | | |
| CS (MPa) | 749 | 865 | 676 | 787 |
| DOL(microns) | 49.4 | 47.6 | 48.6 | 50.8 |

Referring to Tables 1-4, it is apparent that components such as $Li_2O$, CaO, SrO, BaO, and fluoride lower $Tlog_{11}$. $Li_2O$ (Glasses 1-3), CaO (Glasses 4-9), SrO (Glass 10), BaO (Glass 11), and F (Glass 20) are effective in this regard. All these glasses are variations of Glass C1 and their $Tlog_{11}$ can be compared to its $Tlog_{11}$ (i.e., 645°C). In addition to these glasses having lower $Tlog_{11}$ values, they reach $CS_{40} > 500MPa$ with ion exchange times < 5h, in most cases <4h. Glass 4, which contains CaO, is notable since the glass is 10°C softer than Glass C1 and has a similar CS. Glass 10, which contains SrO, is also 10°C softer than Glass C1 and has CS similar to Glass C2. Other components were discovered that are beneficial for increasing compressive stress without softening the glass including $TiO_2$ (Glasses 12-17), $ZrO_2$ (Glasses 18 and 19), and chloride (Glass 21). The addition of $TiO_2$ for ZnO (Glasses 14 and 15) in Glasses C1 an C2 appears to be neutral, meaning that there is not a substantial change in $Tlog_{11}$ or CS and might be useful for other properties such as lowering batch cost.

Aspect (1) of this disclosure pertains to a glass article comprising a glass composition, the glass composition comprising: $SiO_2$ in an amount in a range from about 63 mol% to about 75 mol%; $Al_2O_3$ in an amount in a range from about 7 mol% to about 13 mol%; $R_2O$ in an amount in a range from about 13 mol% to about 24 mol%; RO in an amount from about 1 mol% to about 10 mol%; $P_2O_5$ in an amount in a range from about 0 mol% to about 2 mol%; MgO in a range from about 0 mol% to about 10 mol%; ZnO in an amount in a range from about 0 mol% to about 10 mol%, provided that the combined amount of MgO and ZnO is not 0 mol.%; and the glass composition comprises at least one of (A) and (B): wherein (A) comprises: $Li_2O$ in an amount in a range from about 0 mol% to about 2 mol%; CaO in an amount in a range from about 0 mol% to about 2 mol%; SrO in an amount in a range from about 0 mol% to about 2 mol%; BaO in an amount in a range from about 0 mol% to about 2 mol%; and $F^-$ in an amount in a range from about 0 mol% to about 2 mol%, wherein that the combined amount of $Li_2O$, CaO, SrO, BaO, and $F^-$ is not 0 mol.%; and wherein (B) comprises: $TiO_2$ in an amount in a range from about 0 mol% to about 2 mol%; $ZrO_2$ in an amount in a range from about 0 mol% to about 2 mol%; and $Cl^-$ in an amount in a range from about 0 mol% to about 2 mol%, wherein that the combined amount of $TiO_2$, $ZrO_2$, and $Cl^-$ is not 0 mol.%; and wherein the glass article comprises an anneal point (°C) and a softening point (°C), and a relationship of (anneal point + softening point)/2 in a range from about 625°C to about 725°C.

Aspect (2) pertains to the glass article of Aspect (1), wherein at least one of MgO, CaO, and ZnO is present in a range from about 0 mol% to about 7 mol%.

Aspect (3) pertains to the glass article of Aspect (1) or Aspect (2), The glass article of claim 1, wherein the amount of at least one of MgO, CaO, and ZnO is in a range from about 0.01 mol% to about 3 mol%.

Aspect (4) pertains to the glass article of any one of Aspects (1) through (3), wherein the amount of $SiO_2$ is in a range from about 65 mol% to about 70 mol%; the amount of $Al_2O_3$ is in a range from about 8 mol% to about 10 mol%; the amount of $R_2O$ is in a range from about 15 mol% to about 20 mol%; the amount of $P_2O_5$ is in a range from about 0 mol% to about 0.5 mol%; the amount of MgO is in a range from about 0 mol% to about 4 mol%; and the amount of ZnO is in a range from about 0 mol% to about 3 mol%.

Aspect (5) pertains to the glass article of any one of Aspects (1) through (4),wherein the amount of $Li_2O$ is in a range from about 0.5 mol% to about 1.1 mol% and the amount of CaO is in a range from about 0.01 mol% to about 0.1 mol%.

Aspect (6) pertains to the glass article of any one of Aspects (1) through (5), wherein the amount of $TiO_2$ is in a range from about 0.5 mol% to about 2 mol%.

Aspect (7) pertains to the glass article of any one of Aspects (1) through (6), wherein the amount of ZrO$_2$ is in a range from about 0.5 mol% to about 1 mol%.

Aspect (8) pertains to the glass article of any one of Aspects (1) through (7), wherein the glass article is substantially free of B$_2$O$_3$ and a water content β-OH of at least 0.1 abs/mm.

Aspect (9) pertains to the glass article of any one of Aspects (1) through (8), wherein the amount of P$_2$O$_5$ is at least 0.45 mol%.

Aspect (10) pertains to the glass article of any one of Aspects (1) through (9), wherein the glass article comprises a compressive stress (CS) of at least about 600 MPa.

Aspect (11) pertains to the glass article of any one of Aspects (1) through (10), wherein the glass article comprises a compressive stress from about 600 MPa to about 950 MPa.

Aspect (12) pertains to the glass article of any one of Aspects (1) through (11), wherein the relationship of (anneal point + softening point)/2 is less than 665°C.

Aspect (13) pertains to the glass article of any one of Aspects (1) through (12), wherein the relationship of (anneal point + softening point)/2 is at least 695°C.

Aspect (14) pertains to the glass article of any one of Aspects (1) through (13), wherein the glass article is substantially free of parakeldyshite defects.

Aspect (15) pertains to the glass article of any one of Aspects (1) through (14), wherein the glass article comprises a temperature (°C) at a viscosity of 10$^{10}$ poise (T$_{log10}$) that is in a range of about 630°C to about 705°C.

Aspect (16) pertains to the glass article of Aspect (15), wherein the glass article comprises a temperature (°C) at a viscosity of 10$^{10}$ poise (T$_{log10}$) that is in a range of about 640°C to about 690°C.

Aspect (17) pertains to the glass article of any one of Aspects (1) through (16), wherein the glass article comprises a temperature (°C) at a viscosity of 10$^{11}$ poise (T$_{log11}$) that is less than about 650°C.

Aspect (18) pertains to the glass article of any one of Aspects (1) through (16), wherein the glass article comprises a temperature (°C) at a viscosity of 10$^{11}$ poise (T$_{log11}$) that greater than about 650°C.

Aspect (19) pertains to the glass article of any one of Aspects (1) through (16), wherein the glass article comprises a temperature (°C) at a viscosity of 10$^{11}$ poise (T$_{log11}$) that is about 650°C.

Aspect (20) pertains to the glass article of any one of Aspects (1) through (16), wherein the glass article comprises a temperature (°C) at a viscosity of 10$^{11}$ poise (T$_{log11}$) that is in a range of about 580°C to about 680°C.

Aspect (21) pertains to the glass article of any one of Aspects (1) through (20), wherein comprising a compressive stress that extends from a surface to a depth of compression (DOL) of about 40 μm.

Aspect (22) pertains to the glass article of Aspect (21), wherein the glass article comprises a temperature (°C) at a viscosity of 10$^{11}$ poise (T$_{log11}$) that is in a range of about 610°C to about 675°C.

Aspect (23) pertains to the glass article of Aspect (22), wherein the glass article comprises a temperature (°C) at a viscosity of 10$^{11}$ poise (T$_{log11}$) that is in a range of about 580°C to about 650°C.

Aspect (24) pertains to the glass article of any one of Aspects (1) through (23), wherein the glass article comprises a temperature (°C) at a viscosity of 10$^{12}$ poise (T$_{log12}$) that is in a range of about 560°C to about 640°C.

Aspect (25) pertains to the glass article of Aspect (24), wherein the glass article comprises a temperature (°C) at a viscosity of 10$^{12}$ poise (T$_{log12}$) that is in a range of about 570°C to about 610°C.

Aspect (26) pertains to the glass article of any one of Aspects (1) through (25), wherein the glass article comprises a temperature (°C) at a viscosity of 35000 poise (T$_{35kP}$) of no more than 1110°C.

Aspect (27) pertains to the glass article of any one of Aspects (1) through (25), wherein the glass article comprises a temperature (°C) at a viscosity of 35000 poise (T$_{35kP}$) of no more than 1090°C.

Aspect (28) pertains to a vehicle comprising: a body defining an interior and an opening in communication with the interior; and a glass article disposed in the opening; the glass article comprising at least a first layer having the glass composition of any one of Aspects (1) through (27).

Aspect (29) pertains to the vehicle Aspect (28), wherein the glass article further comprises a second layer laminated to the first layer, wherein the second layer is a soda lime glass.

Aspect (30) pertains to the glass article of Aspect (28) or Aspect (29), wherein the second layer is arranged on an exterior of the vehicle and the first layer is arranged on an interior of the vehicle.

Aspect (31) pertains to the glass article of any one of Aspects (28) through (30), wherein the second layer is thicker than the first layer.

Aspect (32) pertains to a laminate comprising: a first glass layer; an interlayer disposed on the first glass layer; and a second glass layer disposed on the interlayer opposite the first glass layer wherein the second glass layer comprises a glass composition, the glass composition comprising:

SiO$_2$ in an amount in a range from about 63 mol% to about 75 mol%;
Al$_2$O$_3$ in an amount in a range from about 7 mol% to about 13 mol%;
R$_2$O in an amount in a range from about 13 mol% to about 24 mol%;

RO in an amount from about 1 mol% to about 10 mol%;

$P_2O_5$ in an amount in a range from about 0 mol% to about 2 mol%;

MgO in a range from about 0 mol% to about 10 mol%;

ZnO in an amount in a range from about 0 mol% to about 10 mol%, provided that the combined amount of MgO and ZnO is not 0 mol.%; and the glass composition comprises at least one of (A) and (B):

wherein (A) comprises:

$Li_2O$ in an amount in a range from about 0 mol% to about 2 mol%;

CaO in an amount in a range from about 0 mol% to about 2 mol%;

SrO in an amount in a range from about 0 mol% to about 2 mol%;

BaO in an amount in a range from about 0 mol% to about 2 mol%; and

$F^-$ in an amount in a range from about 0 mol% to about 2 mol%, wherein that the combined amount of $Li_2O$, CaO, SrO, BaO, and $F^-$ is not 0 mol.%; and

wherein (B) comprises:

$TiO_2$ in an amount in a range from about 0 mol% to about 2 mol%;

$ZrO_2$ in an amount in a range from about 0 mol% to about 2 mol%;

and

$Cl^-$ in an amount in a range from about 0 mol% to about 2 mol%, wherein that the combined amount of $TiO_2$, $ZrO_2$, and $Cl^-$ is not 0 mol.%; and

wherein the glass article comprises an anneal point (°C) and a softening point (°C), and a relationship of (anneal point + softening point)/2 in a range from about 625°C to about 725°C.

Aspect (33) pertains to the laminate of Aspect (32), wherein the first glass layer comprises a thickness of 1.6 mm or greater, and the second glass layer comprises a thickness less than about 1.6 mm.

Aspect (34) pertains to the laminate of Aspect (32) or Aspect (33), wherein the first glass layer and the second glass layer are curved.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that any particular order be inferred. In addition, as used herein, the article "a" is intended to include one or more than one component or element, and is not intended to be construed as meaning only one.

It will be apparent to those skilled in the art that various modifications and variations can be made without departing from the spirit or scope of the disclosed embodiments. Since modifications, combinations, sub-combinations and variations of the disclosed embodiments incorporating the spirit and substance of the embodiments may occur to persons skilled in the art, the disclosed embodiments should be construed to include everything within the scope of the appended claims and their equivalents.

**Claims**

1.  A glass article comprising a glass composition, the glass composition comprising:

$SiO_2$ in an amount in a range from about 63 mol% to about 75 mol%;

$Al_2O_3$ in an amount in a range from about 7 mol% to about 13 mol%;

$R_2O$ in an amount in a range from about 13 mol% to about 24 mol%;

RO in an amount from about 1 mol% to about 10 mol%;

$P_2O_5$ in an amount in a range from about 0 mol% to about 2 mol%;

MgO in a range from about 0 mol% to about 10 mol%;

ZnO in an amount in a range from about 0 mol% to about 10 mol%, provided that the combined amount of MgO and ZnO is not 0 mol.%; and the glass composition comprises at least one of (A) and (B):

wherein (A) comprises:

$Li_2O$ in an amount in a range from about 0 mol% to about 2 mol%;

CaO in an amount in a range from about 0 mol% to about 2 mol%;
SrO in an amount in a range from about 0 mol% to about 2 mol%;
BaO in an amount in a range from about 0 mol% to about 2 mol%; and
F$^-$ in an amount in a range from about 0 mol% to about 2 mol%, wherein that
the combined amount of Li$_2$O, CaO, SrO, BaO, and F$^-$ is not 0 mol.%; and

wherein (B) comprises:

TiO$_2$ in an amount in a range from about 0 mol% to about 2 mol%;
ZrO$_2$ in an amount in a range from about 0 mol% to about 2 mol%;

and
Cl$^-$ in an amount in a range from about 0 mol% to about 2 mol%, wherein that the combined amount of TiO$_2$, ZrO$_2$, and Cl$^-$ is not 0 mol.%; and
wherein the glass article comprises an anneal point (°C) and a softening point (°C), and a relationship of (anneal point + softening point)/2 in a range from about 625°C to about 725°C.

2. The glass article of claim 1, wherein at least one of MgO, CaO, and ZnO is present in a range from about 0 mol% to about 7 mol%.

3. The glass article of claim 1 or claim 2, wherein the glass composition comprises one of one of
ein the amount of Li$_2$O is in a range from about 0.5 mol% to about 1.1 mol%,
the amount of CaO is in a range from about 0.01 mol% to about 0.1 mol%,
the amount of TiO$_2$ is in a range from about 0.5 mol% to about 2 mol%.
the amount of ZrO$_2$ is in a range from about 0.5 mol% to about 1 mol%, and
the amount of P$_2$O$_5$ is at least 0.45 mol%.

4. The glass article of any one of the preceding claims, wherein the glass article is substantially free of B$_2$O$_3$ and a water content β-OH of at least 0.1 abs/mm.

5. The glass article of any one of the preceding claims, wherein the glass article comprises a compressive stress from about 600 MPa to about 950 MPa.

6. The glass article of any one of the preceding claims, wherein the glass article is substantially free of parakeldyshite defects.

7. The glass article of any one of the preceding claims, wherein the glass article comprises a temperature (°C) at a viscosity of 10$^{10}$ poise (T$_{log10}$) that is in a range of about 630°C to about 705°C.

8. The glass article of any one of the preceding claims, wherein the glass article comprises any one of
a temperature (°C) at a viscosity of 10$^{11}$ poise (T$_{log11}$) that is less than about 650°C,
a temperature (°C) at a viscosity of 10$^{11}$ poise (T$_{log11}$) that greater than about 650°C,
a temperature (°C) at a viscosity of 10$^{11}$ poise (T$_{log11}$) that is about 650°C, and
a temperature (°C) at a viscosity of 10$^{11}$ poise (T$_{log11}$) that is in a range of about 580°C to about 680°C.

9. The glass article of any one of the preceding claims, wherein comprising a compressive stress that extends from a surface to a depth of compression (DOL) of about 40 μm.

10. The glass article of claim 9, wherein the glass article comprises any one of
a temperature (°C) at a viscosity of 10$^{11}$ poise (T$_{log11}$) that is in a range of about 610°C to about 675°C,
a temperature (°C) at a viscosity of 10$^{11}$ poise (T$_{log11}$) that is in a range of about 580°C to about 650°C,
a temperature (°C) at a viscosity of 10$^{12}$ poise (T$_{log12}$) that is in a range of about 560°C to about 640°C, and
a temperature (°C) at a viscosity of 10$^{12}$ poise (T$_{log12}$) that is in a range of about 570°C to about 610°C.

11. The glass article of any one of the preceding claims, wherein the glass article comprises a temperature (°C) at a viscosity of 35000 poise (T$_{35kP}$) of no more than 1110°C.

12. A vehicle comprising:

a body defining an interior and an opening in communication with the interior; and
a glass article disposed in the opening;
the glass article comprising at least a first layer having the glass composition of any one of the preceding claims.

13. The vehicle of claim 12, wherein the glass article further comprises a second layer laminated to the first layer, wherein the second layer is a soda lime glass.

14. The vehicle of claims 12 or claim 13, wherein the second layer is arranged on an exterior of the vehicle and the first layer is arranged on an interior of the vehicle and wherein the second layer is thicker than the first layer.

15. A laminate comprising:

a first glass layer;
an interlayer disposed on the first glass layer; and
a second glass layer disposed on the interlayer opposite the first glass layer wherein the second glass layer comprises the glass composition of any one of claims 1-11, wherein the first glass layer comprises a thickness of 1.6 mm or greater, and the second glass layer comprises a thickness less than about 1.6 mm, and wherein the first glass layer and the second glass layer are curved.

10A FORM FIRST GLASS ARTICLE

10B FORM SECOND GLASS ARTICLE

20A CUT AND FINISH FIRST GLASS ARTICLE

20B CUT AND FINISH SECOND GLASS ARTICLE

30 PAIR SAGGING FIRST AND SECOND GLASS ARTICLES

40 APPLY INTERLAYER BETWEEN FIRST AND SECOND GLASS ARTICLES

50 HEAT THREE LAYER STACK TO CREATE LAMINATE

FIG. 1A

FIG. 1B

FIG. 2

FIG. 3

FIG. 4

FIG. 5

FIG. 6

FIG. 7

FIG. 8

FIG. 9

*FIG. 10*

Europäisches
Patentamt

European
Patent Office

Office européen
des brevets

**EUROPEAN SEARCH REPORT**

Application Number

EP 20 18 9883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/098935 A1 (PHAN DANG CUONG [DE] ET AL) 4 April 2019 (2019-04-04) <br> * examples 2-6 * | 1-12 | INV. <br> C03C3/087 <br> C03C3/097 <br> C03C3/11 |
| X | US 2013/017380 A1 (MURATA TAKASHI [JP] ET AL) 17 January 2013 (2013-01-17) <br> * examples 1-9,20-24 * | 1-11 | C03C3/112 <br> C03C21/00 <br> B32B17/00 <br> C03C27/10 |
| X | WO 2019/041359 A1 (SCHOTT GLASS TECH SUZHOU CO LTD [CN]) <br> 7 March 2019 (2019-03-07) <br> * examples S1-S14 * | 1-11 | |
| X | US 2010/288351 A1 (SPEIT BURKHARD [DE] ET AL) 18 November 2010 (2010-11-18) <br> * examples 2,4-7 * | 1-11,15 | |
| X | WO 2013/191110 A1 (NIPPON ELECTRIC GLASS CO [JP]) 27 December 2013 (2013-12-27) <br> * examples 24-39 * | 1-11 | |
| X | US 2018/370843 A1 (GROSS TIMOTHY MICHAEL [US] ET AL) 27 December 2018 (2018-12-27) <br> * examples 1-77 * | 1-15 | TECHNICAL FIELDS SEARCHED (IPC) <br><br> C03C <br> B32B |
| X | US 2015/140325 A1 (GROSS TIMOTHY MICHAEL [US] ET AL) 21 May 2015 (2015-05-21) <br> * examples 1-74 * | 1-11 | |
| X | US 2018/194670 A1 (GROSS TIMOTHY MICHAEL [US]) 12 July 2018 (2018-07-12) <br> * examples 1-10 * | 1-12 | |
| X | US 2017/320769 A1 (GUO XIAOJU [US] ET AL) 9 November 2017 (2017-11-09) <br> * examples 1-12 * | 1-11 | |

-/--

The present search report has been drawn up for all claims

| Place of search | Date of completion of the search | Examiner |
|---|---|---|
| Munich | 1 December 2020 | Saldamli, Saltuk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 18 9883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/030848 A1 (STERLITE TECHNOLOGIES LTD [IN]; SEHGAL JEETENDRA [IN]) 7 March 2013 (2013-03-07) * examples 1-75 * ----- | 1-12 | |

TECHNICAL FIELDS
SEARCHED        (IPC)

The present search report has been drawn up for all claims

| Place of search | Date of completion of the search | Examiner |
|---|---|---|
| Munich | 1 December 2020 | Saldamli, Saltuk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 20 18 9883

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2020

| Patent document cited in search report | | Publication date | Patent family member(s) | | Publication date |
|---|---|---|---|---|---|
| US 2019098935 | A1 | 04-04-2019 | CH | 714241 A2 | 15-04-2019 |
| | | | CN | 109608048 A | 12-04-2019 |
| | | | DE | 102017123000 A1 | 04-04-2019 |
| | | | GB | 2567319 A | 10-04-2019 |
| | | | JP | 6576535 B2 | 18-09-2019 |
| | | | JP | 2019062895 A | 25-04-2019 |
| | | | US | 2019098935 A1 | 04-04-2019 |
| US 2013017380 | A1 | 17-01-2013 | NONE | | |
| WO 2019041359 | A1 | 07-03-2019 | CN | 111094199 A | 01-05-2020 |
| | | | EP | 3679002 A1 | 15-07-2020 |
| | | | JP | 2020532481 A | 12-11-2020 |
| | | | KR | 20200050457 A | 11-05-2020 |
| | | | US | 2020199013 A1 | 25-06-2020 |
| | | | WO | 2019041359 A1 | 07-03-2019 |
| US 2010288351 | A1 | 18-11-2010 | CN | 101885580 A | 17-11-2010 |
| | | | DE | 102009050988 B3 | 04-11-2010 |
| | | | EP | 2429963 A1 | 21-03-2012 |
| | | | JP | 4944977 B2 | 06-06-2012 |
| | | | JP | 2010267965 A | 25-11-2010 |
| | | | KR | 20100122466 A | 22-11-2010 |
| | | | TW | 201100347 A | 01-01-2011 |
| | | | US | 2010288351 A1 | 18-11-2010 |
| | | | WO | 2010130358 A1 | 18-11-2010 |
| WO 2013191110 | A1 | 27-12-2013 | JP | 5954690 B2 | 20-07-2016 |
| | | | JP | 2014001094 A | 09-01-2014 |
| | | | WO | 2013191110 A1 | 27-12-2013 |
| US 2018370843 | A1 | 27-12-2018 | CN | 111093977 A | 01-05-2020 |
| | | | EP | 3642029 A1 | 29-04-2020 |
| | | | JP | 2020525379 A | 27-08-2020 |
| | | | KR | 20200023396 A | 04-03-2020 |
| | | | TW | 201904901 A | 01-02-2019 |
| | | | US | 2018370843 A1 | 27-12-2018 |
| | | | WO | 2018237266 A1 | 27-12-2018 |
| US 2015140325 | A1 | 21-05-2015 | CN | 105916824 A | 31-08-2016 |
| | | | EP | 3071526 A1 | 28-09-2016 |
| | | | JP | 6725416 B2 | 15-07-2020 |
| | | | JP | 2016538221 A | 08-12-2016 |
| | | | KR | 20160085839 A | 18-07-2016 |
| | | | TW | 201533001 A | 01-09-2015 |
| | | | TW | 201922650 A | 16-06-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 20 18 9883

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2020

| Patent document cited in search report | Publication date | Patent family member(s) | | Publication date |
|---|---|---|---|---|
| | | US | 2015140325 A1 | 21-05-2015 |
| | | US | 2019077696 A1 | 14-03-2019 |
| | | WO | 2015077135 A1 | 28-05-2015 |
| US 2018194670 A1 | 12-07-2018 | CN | 110191864 A | 30-08-2019 |
| | | EP | 3565789 A1 | 13-11-2019 |
| | | JP | 2020503234 A | 30-01-2020 |
| | | KR | 20190102266 A | 03-09-2019 |
| | | TW | 201840505 A | 16-11-2018 |
| | | US | 2018194670 A1 | 12-07-2018 |
| | | WO | 2018129282 A1 | 12-07-2018 |
| US 2017320769 A1 | 09-11-2017 | CN | 109311728 A | 05-02-2019 |
| | | EP | 3452419 A1 | 13-03-2019 |
| | | JP | 2019519452 A | 11-07-2019 |
| | | KR | 20190002671 A | 08-01-2019 |
| | | TW | 201742841 A | 16-12-2017 |
| | | US | 2017320769 A1 | 09-11-2017 |
| | | WO | 2017192533 A1 | 09-11-2017 |
| WO 2013030848 A1 | 07-03-2013 | AU | 2011101310 A4 | 10-11-2011 |
| | | CN | 103534216 A | 22-01-2014 |
| | | JP | 2014527015 A | 09-10-2014 |
| | | KR | 20140057474 A | 13-05-2014 |
| | | WO | 2013030848 A1 | 07-03-2013 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62884439

**Non-patent literature cited in the description**

- Standard Test Method for Measurement of Glass Stress-Optical Coefficient. *ASTM standard C770-98,* 2013